# EUROPEAN PATENT APPLICATION

(11) **EP 4 703 976 A1**
(43) Date of publication of application: **04.03.2026**
(21) Application number: 24201535.2
(22) Date of filing: 20.09.2024
(51) Int. Cl.: G06N 3/098, G06N 20/20, G06Q 10/20

(54) **A METHOD AND SYSTEM FOR MANAGING PERFORMANCE OF ASSETS IN A COMPUTING ENVIRONMENT**

(30) Priority: 30.08.2024 EP 24197611
(71) Applicant: Siemens Aktiengesellschaft, 80333 München (DE)
(72) Inventor: MENON, Nisha, 560100 Bangalore, Karnataka (IN)
(74) Representative: HKW Intellectual Property PartG mbB

(57) **Abstract**

The present invention relates a method and system for managing performance of assets (110A-N) in computing environment (100). The method includes receiving a request for managing performance of assets (110A-N) from user devices (108AN). Further, the method includes determining target devices (106A-N) responsible for managing the performance of the assets (110A-N). Furthermore, the method includes determining a baseline Artificial Intelligence (AI) model based on model parameters, asset parameters, and a target device parameter. Further, the method includes classifying the baseline AI model into sub models. The method includes deploying the sub models at each of the target devices (106A-N). Also, the method includes obtaining a real-time data corresponding to the assets (110A-N) from the target devices (106A-N). Additionally, the method includes predicting performance parameters associated with the assets (110A-N) based on the real-time data. Further, the method includes determining actions to be performed on the assets (110A-N).

## Description

### CROSS-REFERNCE TO RELATED APPLICATIONS

This application claims priority to and the benefit of patent application number EP24197611.7 titled "A METHOD AND SYSTEM FOR MANAGING PERFORMANCE OF ASSETS IN A COMPUTING ENVIRONMENT", filed in the European Patent Office on August 30, 2024. The specification of the above referenced patent application is incorporated herein by reference in its entirety.

The present invention generally relates to the field of product lifecycle management systems, and more particularly relates to a method and system for managing performance of assets in a computing environment.

Typically, organizations may require strategic and efficient Product lifecycle management (PLM) approaches to improve product performance in a market and remain competitive. The PLM approaches may require continuous improvement and development of additional features to meet evolving consumer demands and sustain market relevance. Therefore, it becomes crucial to understand performance of products at each stage, for example, from design stage to maintenance stage to take informed decisions. By closely monitoring and analyzing each stage of the product lifecycle, the organizations may identify opportunities for product enhancement, address potential issues early, identify early recycling and refurbishment needs for the products and manufacture desired products which meet market expectations.

Traditional PLM systems involving multiple parties manage sensitive data in isolated manner. Such PLM systems pose significant challenges, particularly when it comes to deriving insights from each of the parties involved. Therefore, it becomes challenging to collect data from each of such parties and process the data. A relevant example may be a circular economy approach. In circular economy approach, each party may have a unique role in managing the data in isolation in order to achieve individual goals. However, in situations where actions are to be collaboratively performed between such parties, the data may not be easily accessed by the other parties due to data sensitivity concerns and due to lack of cooperation among other parties. Additionally, managing and processing large volumes of data generated during a middle of life phase requires extensive infrastructure, complicating the collaboration further.

In one example, combining a beginning-of-life (BoL) information of a product with its middle-of-life (MoL) and end-of-life (EoL) information may significantly improve a product repurposing efficiency. However, typically, the BoL information resides with Original Equipment Manufacturers (OEMs), and the MoL and EoL information resides with other parties, such as, for example, repair workshops and recycling facilities, respectively. In a case where a product's life cycle impact is to be analyzed, access to OEM inventory data is essential. However, such OEM inventory data are often considered sensitive process data. Therefore, sharing such data may lead to perceived competitive disadvantages for the parties, hindering access to primary life cycle inventory data.

Furthermore, large volumes of in-use data are generated during the MoL stage, requiring significant storage and processing infrastructure. Additionally, recycling facilities require material chemistry, composition, and disassembly instructions, which face intellectual property (IP) concerns and lack of data sharing incentives. This restricts information flow across life cycle stages. Although, complex encryption mechanisms may address privacy concerns, such mechanism may affect behavior of the original data, reducing the effectiveness of joint model-building activities.

Therefore, there is a need for an improved system which enables secure collaboration in circular economies and efficiently manage data sensitivity issues.

Therefore, it is an object of the present invention to provide a method and system for managing performance of assets in a computing environment.

The object of the present invention is achieved by a method for managing performance of one or more assets in a computing environment. The method comprises receiving a request for managing a performance of one or more assets in a computing environment, from one or more user devices. The request comprises one or more user requirements and one or more user preferences. The one or more user requirements comprises asset performance optimization, predictive maintenance, data-driven insights, and the like. The one or more user preferences comprises data accessibility levels, data priority, data communication paths and the like. The one or more assets comprises at least one of automation device, mobile vehicle, networking equipment, power plants, robots, control systems, energy devices, and the like.

The method comprises determining one or more target devices in the computing environment, responsible for managing the performance of the one or more assets, based on the received request. The one or more target devices comprises at least one of producers, manufacturers, consumers, retailers, collectors, recyclers, repair and refurbishment services, government agencies, non-profit organizations, and the like. The method automatically identifies most suitable target devices which reduces manual configuration and ensures optimal resource utilization. This process minimizes latency in decision-making and improves performance by analyzing the capabilities of the most appropriate target devices in the network.

The method comprises determining a baseline Artificial Intelligence (AI) model corresponding to the performance of the one or more assets, based on at least one of a set of model parameters, a set of asset parameters, and a set of target device parameters. The baseline AI model is an ensemble model trained with distinct feature sets, providing a joint embedded representation of each feature set. These embeddings are combined and feeds as input to an output layer. The set of model parameters comprises features used for training with their statistics such as, for example, typical ranges, and distributions. Further, the model parameters comprise parties involved in the training, hyperparameters used in the training process, and the like. The set of asset parameters comprises asset configurations, asset operational conditions such as usage patterns, maintenance history, environmental conditions, asset measurement data, asset number, asset manufacturer details, asset type, asset model identifier and the like. The set of target device parameters comprises device capability, role of the target device, hierarchical location in a computing environment, load handling, computation power, bandwidth, and the like.

The method comprises classifying the determined baseline AI model into one or more sub models based on a type of the one or more target devices and a role of each of the one or more target devices. The method comprises deploying the one or more sub models at each of the one or more target devices, based on the classification. The ensemble modeling approach allows each target device to play a key role in overall task. The aggregation of results from individual sub models helps to achieve improved performance of the baseline AI model. The one or more sub-model classification allows for distributed processing, where each target device handles tasks according to respective specific role and capacity. This process optimizes computational efficiency, reduces the processing load on any single device, and speeds up model deployment and execution process.

The method comprises obtaining real-time data corresponding to the one or more assets from the one or more target devices, upon deploying the one or more sub models at each of the one or more target devices. The real-time data comprises the set of asset parameters, actual operational data of the assets, data corresponding to lifecycle stage of the asset, asset lifespan data, inventory data, and the like. The process of retrieving real-time data ensures that the one or more sub models are fed with up-to-date information, improving the accuracy and timeliness of performance predictions and enabling responsive decision-making in changing operational conditions.

The method comprises predicting a set of performance parameters associated with the one or more assets based on the obtained real-time data, using a trained asset performance model. The set of performance parameters comprises operational efficiency, health and condition monitoring, energy consumption, predictive maintenance indicators, quality control, economic performance, environmental impact, safety and compliance, and the like. The prediction of the set of performance parameters allows for proactive management of asset performance. This enables anticipation of potential performance issues and optimize operations before problems arise, thereby reducing downtime and enhancing asset longevity.

The method comprises determining one or more actions to be performed on the one or more assets based on the predicted set of performance parameters. The one or more actions comprises adjusting operational settings, balancing load distribution, corrective actions, preventive maintenance, early maintenance, sending for refurbishment before full shutdown, early recycling, tuning AI Models, updating software or firmware, reducing power consumption, switching to backup power, initiating emergency shutdowns, activating safety mechanisms, ensuring regulatory compliance and the like.

The method comprises outputting the predicted set of performance parameters and the determined one or more actions to be performed on a user interface of the one or more user devices.

In a preferred embodiment, in deploying the one or more sub models at each of the one or more target devices, the method further comprises validating a status of the determined one or more target devices based on the set of asset parameters corresponding to the one or more assets, and the set of target device parameters. The status comprises at least one of an active status, an inactive status, a faulty status, an idle status, and a standby status. Further, the method comprises deploying the one or more sub models at each of the one or more target devices based on the validated status. The method may dynamically adapt to real-time device status changes by automatically adjusting the deployment of the one or more sub-models as device conditions fluctuate. For example, if an active target device becomes idle, the system may be repurposed, ensuring continuous deployment and task completion without manual intervention. By validating the status of the one or more target devices, it can be ensured that the one or more sub-models are deployed on devices that are operational and capable of handling the task. This prevents deployment to faulty or inactive target devices, enhancing system reliability and reducing likelihood of performance degradation or errors during execution. Further, by validating whether the target devices are idle, active, or in standby, the system can efficiently allocate resources.

In another preferred embodiment, in classifying the determined baseline AI model into the one or more sub models, the method further comprises determining a plurality of input variables available at each of the one or more target devices. Also, the method comprises classifying the determined baseline AI model into the one or more sub models based on the determined plurality of input variables.

In another preferred embodiment, in predicting the set of performance parameters associated with the one or more assets, the method further comprises segmenting the baseline AI model into the one or more sub models. Each of the one or more sub models comprise a similar output variable and a plurality of input variables. Further, the method comprises training the one or more sub models at each of the one or more target devices with a respective real-time data associated with corresponding target device, using a federated learning technique. The process of training the one or more sub-models locally using the federated learning technique ensures that sensitive real-time data remains on the one or more target devices without being shared. This decentralized approach preserves data privacy and security, meeting regulatory compliance while still enabling effective model training on distributed datasets.

The method further comprises obtaining individual model weights corresponding to each of the trained sub-models from the one or more target devices. By transmitting the individual model weights rather than raw data, the computing system reduces the volume of data exchanged between the one or more target devices and the computing system. This minimizes network bandwidth usage and lowers communication latency, enabling faster prediction cycles and near real-time performance management. Furthermore, the method comprises generating the asset performance model for the one or more assets based on the obtained individual model weights. Also, the method comprises predicting the set of performance parameters associated with the one or more assets based on the obtained real-time data and the generated asset performance model.

In an aspect of the preferred embodiment, in predicting the set of performance parameters associated with the one or more assets, the method further comprises obtaining one or more part prediction values corresponding to the set of performance parameters from each of the one or more target devices. Further, the method comprises predicting the set of performance parameters associated with the one or more assets by aggregating the obtained one or more part prediction values, using the generated asset performance model.

In another aspect of the preferred embodiment, the method comprises determining at least one target device from among the one or more target devices comprising an output label corresponding to a received request. Further, the method comprises transmitting the predicted set of performance parameters to the determined at least one target device. Furthermore, the method comprises computing one or more gradients for the asset performance model at the determined at least one target device. The one or more gradients are computed by comparing the predicted set of performance parameters with a predefined set of performance parameters. Further, the method comprises updating model weights in the asset performance model based on the computed one or more gradients. Additionally, the method comprises iteratively updating each of the trained sub models at each of the one or more target devices based on the updated model weights in the asset performance model until reaching at least one of a model convergence and a pre-set number of epochs.

In yet another aspect of the preferred embodiment, in training the one or more sub-models at each of the one or more target devices with the respective real-time data associated with each target device, using the federated learning model, the method further comprises mapping a set of data instances associated with each of the one or more target devices. Each of the one or more target devices comprise a unique feature space. The set of data instances at one target device overlap with data instances of remaining target devices. Further, the method comprises training the one or more sub-models at each of the one or more target devices based on the mapped set of data instances.

In another preferred embodiment, in determining the one or more actions to be performed on the one or more assets, the method further comprises validating the predicted set of performance parameters using an Artificial Intelligence (AI)-based action model and a set of prestored rules. Further, the method comprises determining a deviation value in the predicted set of performance parameters based on results of validation. Furthermore, the method comprises mapping the determined deviation value with a prestored action table. Moreover, the method comprises determining the one or more actions to be performed on the one or more assets based on the mapping.

In yet another preferred embodiment, in outputting the predicted set of performance parameters and the determined one or more actions to be performed on the user interface of the one or more user devices, the method comprises generating one or more AI-based insights on the predicted set of performance parameters. The method further comprises generating a performance report of the one or more assets based on the generated one or more AI-based insights. Further, the method comprises outputting the generated performance report and the generated one or more AI-based insights on the user interface of the one or more user devices.

In yet another preferred embodiment, the method comprises generating an asset metadata structure for results of the trained asset performance model and each of the trained sub models. The asset metadata structure comprises information associated with at least one of a material sourcing, an asset durability, recycling guidelines, asset life cycle stages, a current status of the one or more assets, current performance parameters and current stake holders of the one or more assets. The method further comprises storing the generated asset metadata structure in a central repository accessible by the one or more target devices. The process of generating the asset metadata structure consolidates critical information regarding an asset life cycle, performance, and stakeholders into a single, and unified framework. This improves transparency, making it easier for the one or more target devices to track current and historical status of each asset, enhancing traceability across its life cycle. The current performance parameters and status updates within the metadata structure enable real-time monitoring of asset health. This allows the one or more target devices to detect potential issues early, enabling timely interventions to prevent asset failure, reducing downtime, and enhancing operational efficiency. By linking performance results from both the trained asset performance model and the one or more sub-models to the metadata structure, the computing system enables continuous feedback loops. This allows the one or more target devices to leverage historical performance data to refine models and improve asset design or operational strategies.

In still another preferred embodiment, the method comprises establishing a real-time communication channel between the one or more target devices responsible for managing the performance of the one or more assets based on a user request. The method further comprises performing the one or more actions on the one or more assets based on the predicted set of performance parameters using the established real-time communication channel.

In yet another preferred embodiment, the method comprises periodically generating a real-time status of the one or more assets based on the obtained real-time data from the one or more target devices and based on the one or more actions performed on the one or more assets. Further, the method comprises mapping the generated real-time status with at least one asset lifecycle stage using an Artificial Intelligence (AI) model. Furthermore, the method comprises periodically predicting the set of performance parameters associated with the one or more assets based on the mapping. Also, the method comprises determining the one or more actions to be performed on the one or more assets based on the predicted set of performance parameters. Additionally, the method comprises outputting the predicted set of performance parameters and the determined one or more actions to be performed on the user interface of the one or more user devices.

The object of the present invention is also be achieved by a computing system for managing performance of one or more assets in a computing environment. The computing system comprise one or more processors and a memory coupled to the one or more processors. The memory comprises asset performance management module stored in the form of machine-readable instructions and executable by the one or more processors. The asset performance management module is configured for performing the method described above.

The object of the invention can also be achieved by a technical installation. The technical installation comprises one or more assets. The technical installation further comprises a computing system comprising an asset performance management module communicatively coupled to the one or more assets. The asset performance management module is configured for performing a method as described above.

The object of the invention can also be achieved by a computing environment comprising one or more user devices, one or more technical installation and a computing system. The one or more technical installation comprises one or more assets. Further, the computing system is communicatively coupled to the one or more technical installation and the one or more user devices via a network. The computing system comprises an asset performance management module capable of performing method steps as described above.

The object of the invention can also be achieved by a computer-program product, having machine-readable instructions stored therein, that when executed by a processor, causes the processor to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIGs 1A-C: are block diagram representations of computing environments capable of managing performance of one or more assets, according to an embodiment of the present invention;
- FIG 2: is a block diagram of a computing system such as those shown in FIG 1, depicting various components to implement embodiments of the present invention;
- FIG 3: is a block diagram of an asset performance management module, such as those shown in FIG 1 and 2, capable of managing performance of one or more assets, according to the embodiment of the present invention;
- FIG 4: is a block diagram of service interactions between the components of the computing environment such as those shown in FIG. 1, according to an embodiment of the present invention;
- FIG 5: is a schematic representation of an exemplary baseline AI model and one or more sub-models, according to the embodiment of the present invention;
- FIG 6: is a workflow diagram representing interactions of model management module and incentive management service module, according to an embodiment of the present invention;
- FIG 7: is a schematic representation of an exemplary computing environment capable of managing performance of one or more assets using a federated learning service and a network management service, according to an embodiment of the present invention;
- FIG 8: is a block diagram representation depicting an example process of managing performance of one or more assets, according to an embodiment of the present invention;
- FIG 9: is a schematic representation of a computing environment capable of generating an asset metadata structure for results of the trained asset performance model and each of the trained sub models using a digital product passport, according to an embodiment of the present invention;
- FIGs 10A-C: are snapshot representations of example graphical user interface screens depicting a process of managing performance of one or more assets, according to an embodiment of the present invention; and
- FIG 11: is a process flowchart illustrating an exemplary method for managing performance of one or more assets, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

A circular economy refers to a model of economic activity that aims to minimize waste and maximize resource efficiency. Unlike the traditional linear economy, where resources are extracted, used, and discarded, the circular economy promotes a continuous cycle of use, reuse, and recycling. Throughout the present disclosure, the term 'circular economy' (also called circularity and CE) refers to a model of production and consumption of a product, which involves sharing, leasing, reusing, repairing, refurbishing, and recycling existing materials and products as long as possible. CE aims to tackle global challenges as climate change, biodiversity loss, waste, and pollution by emphasizing the design-based implementation of the three base principles of the model. The three principles required for the transformation to a circular economy are: eliminating waste and pollution, circulating products and materials, and the regeneration of nature. Circular economy strives to minimize negative environmental impacts through qualitative transformation coupled with the closure and deceleration of material cycles. Circular economy approaches can take effect in the various stages of the lifecycle of the product enabling longevity, recycling and repairability or biodegradability of the product.

In an embodiment, the lifecycle phases of the product comprise at least one of, a beginning of life phase of the product, a design phase of the product, a sourcing phase of the product, a manufacturing phase of the product, a processing phase of the product, a middle of life stage of the product, a transportation phase of the product, an operation phase of the product, a maintenance phase of the product and a product end of life phase. Advantageously, the present invention aims at ensuring the circular economy framework at each of the phases of the lifecycle of the product.

In an exemplary embodiment, the circular economy facilitates sharing data and collaborating across a plurality of stages of a lifecycle of a product. The present disclosure provides a platform for secure data exchange and joint model training. By using the circular economy framework, the present enables efficient product lifecycle management and decision-making, such as predicting product lifespan, and optimizing routes, and the like. In a preferred embodiment, the circular economy comprises a plurality of stakeholders, or target devices to collaborate effectively and share data for joint model building. Such stakeholders may include, for example, producers, consumers, retailers, collectors, recyclers, and government agencies. These multiple stakeholders interact with each other throughout the product lifecycle, and their actions may significantly impact sustainability of the product.

Federated Learning (FL) may refer to a decentralized machine learning technique. Federated Learning may allow organizations to train models on their local data without sharing sensitive information, addressing privacy concerns that often limit collaboration in the circular economy. By training models collaboratively across multiple stakeholders, FL may process a wide range of datasets and improve model performance, leading to more accurate predictions and better decision-making. Further, FL may minimize the need to transfer large datasets between the stakeholders, reducing bandwidth consumption.

Throughout the specification, the term "asset," as used herein, may include a broad range of products, devices, objects systems, instruments, or machinery employed in various industries or technical installations. This includes but is not limited to, industrial machine comprising motors, gears, bearings, shafts, switchgears, rotors, circuit breakers, protection devices, remote terminal units, transformers, reactors, disconnectors, gear-drives, gradient coils, magnets, radio frequency coils, and the like. Further, the assets may include, such as for example, but not limited to, technical systems comprising turbines, large drives, and other complex systems. It should be understood that the term "asset" should be interpreted broadly to include any product or device or system that generates data and has a life cycle crossing over multiple stages, which leads to performance degradation of the asset or requires analysis within the context of this invention.

Throughout the present invention, the terms browser and browser application or web application or platform may be used interchangeably to mean the same thing. In an embodiment, the terms web application or platform or web app may be used interchangeably to refer to an application, including metadata, which is installed in a browser application. In an embodiment, the terms web application and web app may be used interchangeably to refer to a website and/or application to which access is provided over a network (e.g., the Internet) under a specific profile (e.g., a website that provides email service to a user under a specific profile). In In an embodiment, the term application, when used by itself without modifiers, may be used to refer to, but is not limited to, a web application and/or an extension application that is installed or is to be installed in the browser application.

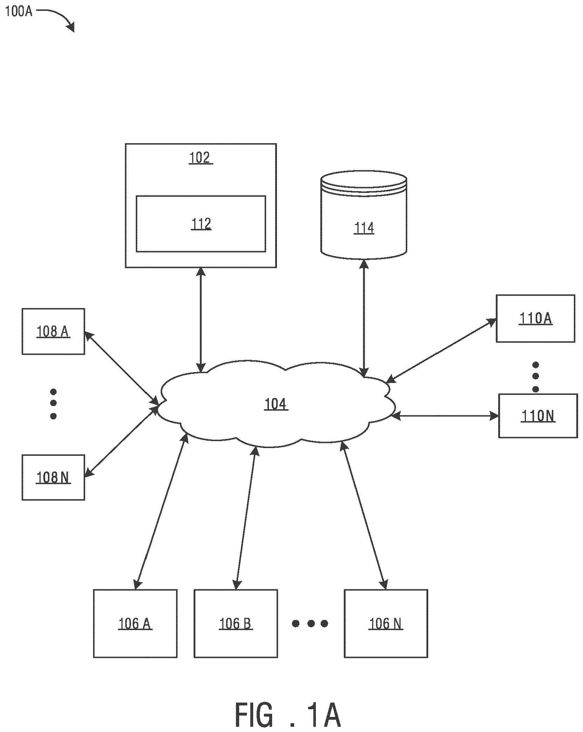

FIGs 1A-C are block diagram representations of computing environments 100A-C capable of managing performance of one or more assets 110A-N, according to an embodiment of the present invention. FIG. 1A depicts a scenario where the one or more assets 110A-N are distributed across the computing environment 100, and data associated with each asset is collected, processed, and shared collaboratively by the one or more target devices 106A-N. In this context, asset parameters are stored and handled individually by the respective target devices 106A-N, ensuring data privacy.

Particularly, FIG 1A depicts a computing system 102 which is capable of managing performance of one or more assets in a computing environment 100A. The computing environment 100A comprises a computing system 102, one or more target devices 106A-N, one or more user devices 108A-N, and one or more assets 110A-N. As used herein, "computing environment" refers to a processing environment comprising configurable computing physical and logical resources, for example, networks, servers, storage, applications, services, and the like, and data distributed over a platform. The computing environment 100 provides on-demand network access to a shared pool of the configurable computing physical and logical resources.

The computing system 102 is connected to one or more asset(s) 110A-N via a network 104 (e.g., Internet). The one or more asset(s) 110A-N may include servers, robots, switches, automation devices, programmable logic controllers (PLC)s, human machine interfaces (HMIs), input output modules, motors, valves, pumps, actuators, sensors, gas turbines, and other industrial equipment(s). The one or more asset(s) 110A-N may also include one or more sensing units (not shown). The one or more sensing unit may be configured for capturing real-time asset data associated with the one or more assets 110A-N. The real time asset data comprises temperature values, pressure values, oil levels, weather condition values, and any other data measured by one or more sensing units placed in the vicinity of the asset 110 or embedded to the one or more assets 110A-N. Specifically, the one or more sensing unit senses the real-time data of the asset 110 and transmits the sensed real-time data of the asset 110 to the computing system 102. The one or more assets 110A-N may be internet of things (IoT) enabled or may be edge devices.

The one or more asset(s) 110A-N are remotely accessed and managed by the one or more target devices 106A-N either directly or via the computing system 102. In such an embodiment, the one or more asset(s) 110A-N may either be located within the same environment 100A as that of the one or more target devices 106A-N, or in another environment.

The one or more asset(s) 110A-N may generate data that may be used for analysis or decision-making. In an example embodiment, the one or more asset(s) 110A-N may be located independently across the computing environment 100, ensuring decentralization and potentially improving data privacy.

The one or more target devices 106A-N (also referred herein as target devices 106A-N) may be responsible for collecting and processing the data from their associated assets. Such processed data may be shared across target devices 106AN or the computing system 102 via a network 106, enabling collaborative analysis and insights. In an embodiment, asset-specific parameters are stored and handled locally by the target devices 106A-N, ensuring data privacy and reducing the need for central storage. The one or more target devices 106A-N may be a laptop computer, desktop computer, tablet computer, smartphone and the like. The one or more target devices 106A-N may access applications (such as enabling users to manage performance of the one or more assets 110A-N) via a web browser. In an embodiment, the one or more target devices 106A-N may communicate with the computing system 102 using application programming interfaces (APIs). Each target devices 106A-N may comprise a user profile and corresponding access privileges. The real time data corresponding to the target devices 106A-N may be shared or exchanged based on the user profile and the access privileges.

The computing system 102 may be a remote server, an edge server, a public cloud, a private cloud, and/or a hybrid cloud configured to provide dedicated software services to its users. Further, the computing system 102 is also connected to one or more user devices 108A-N via the network 104. The user devices 108A-N may access the computing system 102 for managing the performance of the one or more assets 110A-N. In an embodiment, the user devices 108A-N comprises a collaborative task management application (not shown). The user devices 108A-N may be a laptop computer, desktop computer, tablet computer, smartphone and the like. The user devices 108A-N can access applications (such as enabling users to manage performance of the one or more assets 110A-N) via the web browser. Further, the user devices 108A-N may install a plug-in for accessing the applications to manage the performance of the one or more assets 110A-N on the computing system 102 via a plurality of software applications running on the user devices 108A-N.

The external repository 114 is configured to store external information associated with each of user devices 108A-N, the target devices 106A-N, and the assets 110A-N. In an embodiment, the external repository 114 may comprise a relational database (RDBMS), a cloud database, a file system and not only SQL (NoSQL) database. The external repository 114 are encrypted to secure all data stored. In an example embodiment, external repository 114 may correspond to external agency databases, such as government agencies, regulatory authorities, compliance database and the like.

The computing system 102 may comprise a plurality of servers or processors (also known as `cloud infrastructure'), which are geographical distributed, connected with each other via the network 104. A dedicated platform (hereinafter referred to as `cloud platform') is installed on the servers/processors for providing above functionality as an application (hereinafter referred to as `cloud application'). The cloud platform may comprise a plurality of software programs executed on one or more servers or processors of the computing system 102 to enable delivery of the requested applications to the devices and its users.

The computing system 102 comprises a cloud platform, an asset performance management module 112, a server including hardware resources and an operating system (OS), a network interface, and one or more application program interfaces (APIs). The network interface enables communication between the computing system 102, the one or more target devices 106A-N, and the one or more user device(s) 108A-N. The one or more application program interfaces (APIs) may allow the users at the one or more user device(s) 108A-N to access asset information stored at the computing system 102 and perform one or more actions on the assets 110A-N as same instance. The server may include one or more servers on which the OS is installed. The servers may comprise one or more processors, one or more storage devices, such as, memory units, for storing data and machine-readable instructions for example, applications and the one or more application programming interfaces (APIs), and other peripherals required for providing computing functionality. The cloud platform may be a platform which enables functionalities such as data reception, data processing, data rendering, data communication, and the like using the hardware resources and the OS of the servers and delivers the aforementioned services using the application programming interfaces deployed therein. The platform may comprise a combination of dedicated hardware and software built on top of the hardware and the OS. In an alternate embodiment, the computing system 102 may be any other computational server, such as for example, but not limited to, a remote server, a web server, an edge server, a metaverse server and the like.

As used herein the communication network 104, refers to, for example, any wired or wireless network such as the internet, an intranet, that implements Bluetooth^{®} of Bluetooth Sig, Inc., a network that implements Wi-Fi^{®} of Wi-Fi Alliance Corporation, an ultra-wideband communication network (UWB), a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a fifth generation (5G) mobile communication network, a sixth generation (6G) mobile communication network, a long-term evolution (LTE) mobile communication network, a public telephone network, a local area network, a wide area network, an internet connection network, an infrared communication network, or a network formed from any combination of these networks.

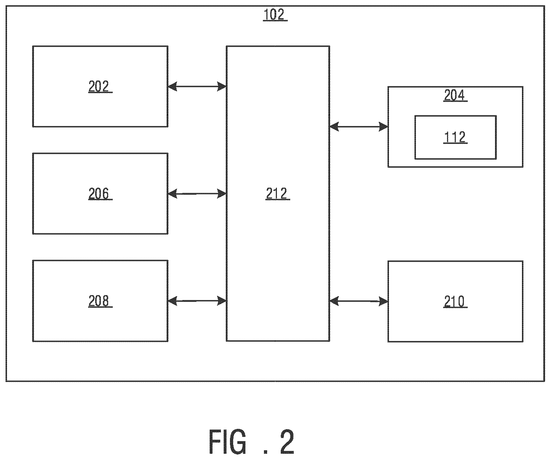

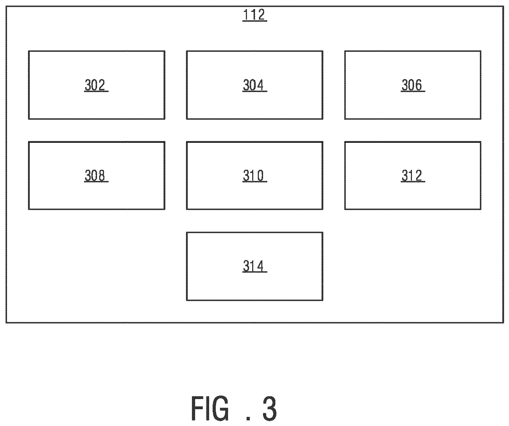

The computing system 102 comprises an asset performance management module 112. The computing system 102 also comprise a processor, a memory, a storage unit, input output unit and a display unit. A detailed view of various components of the computing system 102 is shown in FIG 2. The computing system 102 may be a standalone system or a system on a cloud or an edge server. The asset performance management module 112 is stored in the form of machine-readable instructions and executable by the computing system 102. The detailed components of the asset performance management module 112 is configured for has been explained in FIG. 3.

In an embodiment, the computing system 102 is configured for receiving a request for managing a performance of one or more assets 110A-N in a computing environment 100, from one or more user devices 108A-N. The request comprises one or more user requirements and one or more user preferences. The computing system 102 is configured for determining one or more target devices 106A-N in the computing environment 100, responsible for managing the performance of the one or more assets 110A-N, based on the received request. Further, the computing system 102 is configured for determining a baseline Artificial Intelligence (AI) model corresponding to the performance of the one or more assets 110A-N, based on at least one of a set of model parameters, a set of asset parameters, and a set of target device parameters.

Furthermore, the computing system 102 is configured for classifying the determined baseline AI model into one or more sub models based on a type of the one or more target devices 106A-N and a role of each of the one or more target devices 106A-N. Further, the computing system 102 is configured for deploying the one or more sub models at each of the one or more target devices 106A-N, based on the classification. Additionally, the computing system 102 is configured for obtaining real-time data corresponding to the one or more assets 110A-N from the one or more target devices 106A-N, upon deploying the one or more sub models at each of the one or more target devices 106A-N. Furthermore, the computing system 102 is configured for predicting a set of performance parameters associated with the one or more assets based on the obtained real-time data, using a trained asset performance model. Moreover, the computing system 102 is configured for determining one or more actions to be performed on the one or more assets 110A-N based on the predicted set of performance parameters. Also, the computing system 102 is configured for outputting the predicted set of performance parameters and the determined one or more actions to be performed on a user interface of the one or more user devices 108A-N.

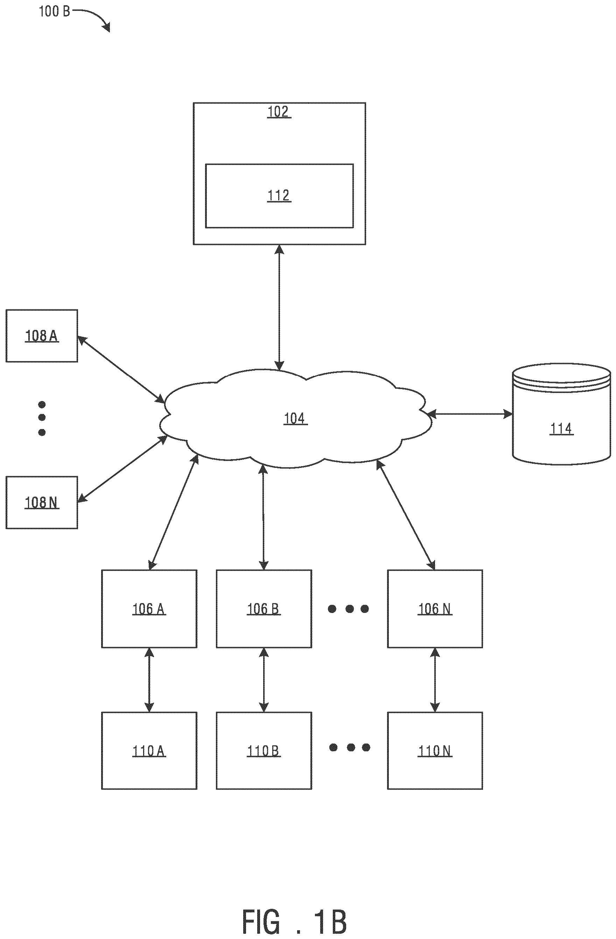

FIG. 1B depicts a scenario where the one or more assets 110A-N are co-located with the one or more target devices 106A-N. The close proximity of the one or more asserts 110A-N and the one or more target devices 106A-N simplifies data collection. The one or more target devices 106A-N may be communicatively coupled to the one or more asserts 110A-N either via a communication network, such as direct connections or local networks. The communication network may be a wireless connection (i.e., internet) or a wired connection (LAN, WLAN, industrial ethernet or the like). In an embodiment, the communication network may be a short range communication (for example, Bluetooth, Wi-Fi, RFID, NFC or any other) and/or a long range communication network (for example, internet, ethernet cable, Industrial Ethernet, or the like).The type of an asset (for example, IoT device, industrial machinery) may influence its ideal location within the environment 100. The frequency and volume of data generated may impact the need for proximity between the one or more assets 110A-N and the one or more target devices 106A-N. Further, the availability and quality of network connectivity may influence asset location decisions. The choice of asset location may depend on a plurality of factors, including the specific use case, technical requirements, and desired outcomes. Understanding these scenarios may help organizations take informed decisions about asset deployment and data management.

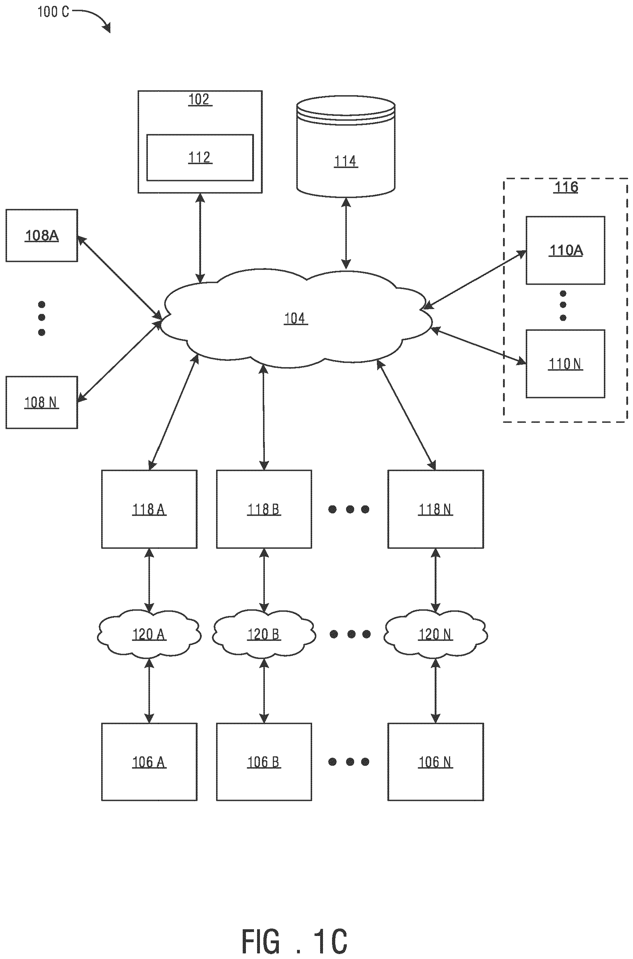

FIG. 1C depicts a scenario where the one or more assets 110A-N are located within one or more technical installations 116 and where the one or more target devices 106A-N may be connected to the computing system 102 via intermediatory federated learning servers (also referred herein as ISs or intermediatory server) 118A-N. The one or more technical installations 116 may include, such as for example, but not limited to, power plants, wind farms, power grids, warehouses, home automation systems, manufacturing facilities, process plants, and other industrial/non-industrial setups.

In such an embodiment, ISs 118A-N act as intermediaries between an individual on-premise servers (OS), such as the computing system 102, that host the sensitive data. The one or more target devices 106A-N may be connected to the ISs 118A-N via a secondary communication network 120A-N. The secondary communication network 120A-N may be a wireless connection (i.e., internet) or a wired connection (LAN, WLAN, industrial ethernet or the like). In an embodiment, the communication network may be a short-range communication (for example, Bluetooth, Wi-Fi, RFID, NFC or any other) and/or a long-range communication network (for example, internet, ethernet cable, Industrial Ethernet, or the like).

The computing system 102 provides communication and coordination between these ISs 118A-N, ensuring that the necessary information is exchanged for joint model training. In an example embodiment, the ISs 118A-N may aggregate and exchange relevant data from the computing system 102. This involves ensuring that the data instances used by the one or more target devices 106A-N are aligned and that the feature spaces are compatible for joint model building. Further, the computing system 102 may coordinate the training process across the ISs 118A-N. The computing system 102 may distribute model parameters, collect updates from the ISs 118A-N, and aggregate the results to generate a global model. Furthermore, the ISs 118A-N may help to preserve data privacy by minimizing the exposure of sensitive data. The computing system 102 then handles aggregated data and model parameters, and not raw data from the individual ISs 118A-N. In an exemplary embodiment, with multiple levels of ISs 118A-N, the computing system 102 may manage hierarchical training, and coordinate the training process across different levels of the hierarchy. Some examples of such ISs 118A-N may include, for example, but not limited to, any server grade machines such as for example, but not limited to, laptops, PCs, edge devices with sufficient RAM, or the like.

Although, FIG. 1C illustrates the computing system 102 connected to one technical installation 116 via the network 104, one skilled in the art can envision that the computing system 102 can be connected to several technical installation 116 located at different locations via the network 104.

FIG. 2 is a block diagram of a computing system 102 such as those shown in FIG 1, depicting various components to implement embodiments of the present invention. In FIG 2, the computing system 102 includes a processor(s) 202, an accessible memory 204, a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like. he processor(s) 202 may also include one or more AI accelerators that can perform AI related processing using input data. Although referenced as an AI accelerator, it is sometimes referred as a neural network accelerator (NNA), neural network chip or hardware, AI processor, AI chip, and the like. The AI accelerator(s) can perform AI related processing to output or provide output data, according to the input data and/or parameters. An AI accelerator can include and/or implement one or more neural networks (e.g., artificial neural networks), and/or one or more storage devices.

Each of the above-mentioned elements or components is implemented in hardware, or a combination of hardware and software. For instance, each of these elements or components can include any application, program, library, script, task, service, process or any type and form of executable instructions executing on hardware such as circuitry that can include digital and/or analog elements (e.g., one or more transistors, logic gates, registers, memory devices, resistive elements, conductive elements, capacitive elements).

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an asset performance management module 112 stored in the form of machine-readable instructions on any of the above-mentioned storage media and may be in communication with and executed by the processor(s) 202.

When executed by the processor(s) 202, the asset performance management module 112 causes the processor(s) 202 to receive a request for managing a performance of the one or more assets 110A-N in the computing environment 100, from the one or more user devices 108A-N. The request may comprise a model activity indicating a specific model building necessary to be performed as a task and respective available parties required to perform this task. The request comprises one or more user requirements and one or more user preferences. The one or more user requirements comprises asset performance optimization, predictive maintenance, data-driven insights, and the like. The one or more user preferences comprises data accessibility levels, data priority, data communication paths and the like. The one or more assets comprises at least one of automation device, mobile vehicle, networking equipment, power plants, robots, control systems, energy devices, and the like.

The asset performance management module 112 causes the processor(s) 202 to determine one or more target devices 106A-N in the computing environment 100, responsible for managing the performance of the one or more assets 110A-N, based on the received request.

Further, the asset performance management module 112 causes the processor(s) 202 to determine a baseline Artificial Intelligence (AI) model corresponding to the performance of the one or more assets 110A-N, based on at least one of the set of model parameters, the set of asset parameters, and the set of target device parameters. The baseline AI model may be an ensemble model trained with distinct feature sets, providing a joint embedded representation of each feature set. These embeddings are combined and feeds as input to an output layer. The set of model parameters comprises features used for training with their statistics such as, for example, typical ranges, and distributions. Further, the set of model parameters comprises parties (also referred herein as target device) involved in the training, hyperparameters used in the training process, and the like. The set of asset parameters comprises asset configurations, asset operational conditions such as usage patterns, maintenance history, environmental conditions, asset measurement data, asset number, asset manufacturer details, asset type, asset model identifier and the like. The set of target device parameters comprises device capability, role of the target device, hierarchical location in the computing environment 100, load handling, computation power, bandwidth, and the like.

Furthermore, the asset performance management module 112 causes the processor(s) 202 to classify the determined baseline AI model into one or more sub models based on a type of the one or more target devices 106A-N and a role of each of the one or more target devices 106A-N. The type of the one or more target devices 106A-N comprises consumers, manufacturers, recyclers, refurbishers, OEMs and the like. The role of the one or more target devices 106A-N comprises asset usage, asset feedback, asset development, material recovery, asset recycling, asset repair and maintenance, asset lifecycle management and the like.

The one or more sub models may be local baseline AI models corresponding to respective target devices 106A-N. In an example embodiment, the baseline AI model is split into parts and are trained locally on the one or more target devices 106A-N. This process corresponds to a model parallelism philosophy of distributed training. In an embodiment, any model which is trained on 'n' features may be split or classified into a max of 'n' models separately trained at individual target devices 106A-N with their parameters propagating to the computing system 102. In an exemplary embodiment, the classification may be performed using an artificial intelligence-based classifier model or a machine learning based classifier model or the like.

In a preferred embodiment, in classifying the determined baseline AI model into the one or more sub models, the asset performance management module 112 causes the processor(s) 202 to determine a plurality of input variables available at each of the one or more target devices. In an exemplary embodiment, the plurality of input variables may include, for example, but not limited to, condensor entering and leaving temperature, power, capacity ratings, chiller type and the like. Further, the asset performance management module 112 causes the processor(s) 202 to classify the determined baseline AI model into the one or more sub models based on the determined plurality of input variables.

Further, the asset performance management module 112 causes the processor(s) 202 to deploy the one or more sub models at each of the one or more target devices 106A-N, based on the classification. In an example embodiment, the one or more sub models may be deployed using direct deployment process, or using cloud-based APIs, or using containers, or via gateways or proxy servers or edge servers or intermediatory servers 118A-N or the like. In case of direct deployment, the one or more sub models may be directly deployed on the one or more target devices 106A-N as standalone applications or libraries. In case of containers, the one or more sub models may be packaged into containers (for example, Docker images) and deployed on the one or more target devices 106A-N using container orchestration platforms.

In a preferred embodiment, in deploying the one or more sub models at each of the one or more target devices 106A-N, the asset performance management module 112 causes the processor(s) 202 to validate a status of the determined one or more target devices 106A-N based on the set of asset parameters corresponding to the one or more assets 110A-N, and the set of target device parameters. The status comprises at least one of an active status, an inactive status, a faulty status, an idle status, and a standby status. The validation process is performed to ensure if all selected target devices 106A-N are live in the computing environment 100 and if the selected target devices 106A-N contain relevant data features necessary to perform a task. Further, the asset performance management module 112 causes the processor(s) 202 to deploy the one or more sub models at each of the one or more target devices 106A-N based on the validated status.

Additionally, the asset performance management module 112 causes the processor(s) 202 to obtain real-time data corresponding to the one or more assets 110A-N from the one or more target devices 106A-N, upon deploying the one or more sub models at each of the one or more target devices 106A-N. The real-time data comprises the set of asset parameters, actual operational data of the assets, data corresponding to lifecycle stage of the asset, asset lifespan data, inventory data, and the like. The real-time data may be obtained using the one or more APIs, or via a communication link, or data streaming platforms, edge gateways, Internet of Things (IoT) network, cloud services, or the like.

Furthermore, the asset performance management module 112 causes the processor(s) 202 to predict a set of performance parameters associated with the one or more assets based on the obtained real-time data, using a trained asset performance model. The set of performance parameters comprises operational efficiency, health and condition monitoring, energy consumption, predictive maintenance indicators, quality control, economic performance, environmental impact, safety and compliance, and the like. The trained asset performance model may correspond to a trained baseline AI model generated upon locally training each of the one or more sub models at the one or more target devices 106A-N and aggregating the results of training into a single trained asset performance model. The trained asset performance model may be a final ensemble AI model.

In a preferred embodiment, in predicting the set of performance parameters associated with the one or more assets, the asset performance management module 112 causes the processor(s) 202 to segment the baseline AI model into the one or more sub models. Each of the one or more sub models comprise a similar output variable and a plurality of input variables. In an example embodiment, the plurality of input variables (also referred herein as data instances) collected across the target devices 106A-N may be matching, which means that samples used at one target device is required to match samples used at other target devices 106A-N, with a feature space being different. In an example embodiment, a manufacturer may define a type, an internal machinery make, a capacity ratings and the like of a chiller, whereas a customer may decide operating ranges of the chiller. Hence, for the same chiller, these different sets of information are collected from multiple stakeholders or target devices 106A-N. This represents a unique data sample with features spread across the target devices 106A-N. Considering the same example as above, for a given chiller, it is important to capture matching information from the manufacturer and the customer to correlate the exact working conditions of the asset (chiller) and arrive at indicators for deteriorating performance. Once the plurality of input variables is uniquely identified, the training process may be initiated using a vertical federated learning (VFL) algorithm.. The VFL may be applied on separate entities by training the sub models at each target devices 106A-Ns. The baseline AI model is then updated with locally learnt model weights.

In an aspect of the preferred embodiment, the asset performance management module 112 causes the processor(s) 202 to train the one or more sub models at each of the one or more target devices 106A-N with a respective real-time data associated with corresponding target device 106A-N, using a federated learning technique. The federated learning technique may be the vertical federated learning algorithm. The one or more sub models are trained at each target devices 106A-N with input features as its own data.

In this preferred embodiment, in training the one or more sub-models at each of the one or more target devices 106A-N with the respective real-time data associated with each target device 106A-N, using the federated learning model, the asset performance management module 112 causes the processor(s) 202 to map a set of data instances associated with each of the one or more target devices 106A-N. Each of the one or more target devices 106A-N comprise a unique feature space. The set of data instances at one target device 106A may overlap with data instances of remaining target devices 106B-N. Further, the asset performance management module 112 causes the processor(s) 202 to train the one or more sub-models at each of the one or more target devices 106A-N based on the mapped set of data instances. As an initial process, a data preprocessing is performed on the sub-model as communicated by the computing system 102 for this task. A raw data corresponding to the input features is converted using this preprocessing method and then used in the training process.

Further, the asset performance management module 112 causes the processor(s) 202 to obtain individual model weights corresponding to each of the trained sub-models from the one or more target devices 106A-N. In an exemplary embodiment, after a first round of epoch at each target device 106A-N, a local model weights are communicated to the computing system 102. The computing system 102 then updates the weights of the baseline model based on the aggregation of the weights sent by each participating target devices 106A-N. In an exemplary embodiment, an epoch may refer to a complete pass through the entire dataset by all participating target devices 106A-N. During each epoch, each target device 106A-N trains its local model using its own dataset, and the local model weights are communicated to the computing system 102.

Further, the asset performance management module 112 causes the processor(s) 202 to generate the asset performance model for the one or more assets based on the obtained individual model weights. The computing system 102 aggregates the local model weights from all participating target devices 106A-N to update a final baseline model (also referred herein as final ensemble AI model). This process is repeated for a plurality of epochs, allowing the final baseline model 1 to learn from the diverse data and patterns present across distributed target devices 106A-N.

Further, the asset performance management module 112 causes the processor(s) 202 to predict the set of performance parameters associated with the one or more assets based on the obtained real-time data and the generated asset performance model.

In an aspect of the preferred embodiment, in predicting the set of performance parameters associated with the one or more assets, the asset performance management module 112 causes the processor(s) 202 to obtain one or more part prediction values corresponding to the set of performance parameters from each of the one or more target devices 106A-N and predict the set of performance parameters associated with the one or more assets 110A-N by aggregating the obtained one or more part prediction values, using the generated asset performance model.

Further, the asset performance management module 112 causes the processor(s) 202 to determine at least one target device 106A from among the one or more target devices 106A-N comprising an output label corresponding to a received request. Further, the asset performance management module 112 causes the processor(s) 202 to transmit the predicted set of performance parameters to the determined at least one target device 106A. Furthermore, the asset performance management module 112 causes the processor(s) 202 to compute one or more gradients for the asset performance model at the determined at least one target device 106A. The one or more gradients are computed by comparing the predicted set of performance parameters with a predefined set of performance parameters. Further, the asset performance management module 112 causes the processor(s) 202 to update the model weights in the asset performance model based on the computed one or more gradients and iteratively update each of the trained sub models at each of the one or more target devices based on the updated model weights in the asset performance model until reaching at least one of a model convergence and a pre-set number of epochs.

In an example embodiment, a prediction is made at the computing system 102 based on updated model weights received from the participating target devices 106A-N. Further, a back propagation is performed at the target devices 106A-N who holds an actual label of this task. The prediction from a previous step is received by this target device 106 to perform back propagation. This target device 106 computes gradients based on an actual and predicted label values and transmits this back to the computing system 102. The server then propagates the gradients back to all the individual target devices 106A-N, who in turn performs weight updates to their individual sub models. This completes one epoch. Further rounds of model training are conducted locally until the set number of epochs are reached, or the convergence happens, whichever is first.

Moreover, the asset performance management module 112 causes the processor(s) 202 to determine one or more actions to be performed on the one or more assets 110A-N based on the predicted set of performance parameters. The one or more actions comprises for example, but not limited to, adjusting operational settings, balancing load distribution, corrective actions, preventive maintenance, tuning AI Models, updating software or firmware, reducing power consumption, switching to backup power, initiating emergency shutdowns, activating safety mechanisms, ensuring regulatory compliance and the like.

In a preferred embodiment, in determining the one or more actions to be performed on the one or more assets, the asset performance management module 112 causes the processor(s) 202 to validate the predicted set of performance parameters using an Artificial Intelligence (AI)-based action model and a set of prestored rules. The AI-based action model may be for example, but not limited to, regression based models to compare the predicted performance versus the expected performance at a given point in time, explainer models to explain the deviations of the data from the normal behaviour using SHAP/LIME algorithms or the like. The process of validation may include validation based on cross checking against known performance curves such as, for example, but not limited to, pump curves for oil wells or COP curves for chillers. The set of prestored rules may be a look up table or historical data, or the like.

Further, the asset performance management module 112 causes the processor(s) 202 to determine a deviation value in the predicted set of performance parameters based on results of validation. The results of validation may be used to determine the deviation value between the predicted set of performance parameters and the actual performance of the assets. The deviation value may be calculated using a plurality of metrics, depending on the specific task and the type of data being used. For example, the metrics may include, but not limited to, a Mean squared error (MSE), a Mean absolute error (MAE), a Root mean squared error (RMSE), R-squared or the like. The Mean absolute error (MAE) may be a measure of the average absolute difference between the predicted and actual values. The Mean squared error (MSE) may be a measure of the average squared difference between the predicted and actual values. The Root mean squared error (RMSE) may be a square root of the MSE, which provides a more interpretable measure of error. The R-squared may be a measure of how well the model fits the data, with values ranging from 0 to 1. A higher R-squared value indicates a better fit.

In an exemplary embodiment, the deviation value may be used to assess the accuracy of the predicted performance parameters and to determine whether further action is needed. A high deviation value may indicate that the predicted performance parameters are significantly different from the actual performance of the assets, suggesting that corrective actions may be necessary. A confidence score may also be used to predict the performance parameters, where the confidence score is a measure of the reliability of the predicted performance parameters. This may be calculated using various methods, such as Bootstrap resampling, Bayesian inference or Ensemble methods or the like.

In an exemplary embodiment, the confidence score may be used to assess the level of uncertainty associated with the predicted performance parameters and to determine whether further analysis or action is needed. A low confidence score may indicate that the predicted performance parameters are unreliable, and that additional data or analysis may be required. By combining the deviation value and the confidence score, the asset performance management module 112 may make informed decisions about the actions to be performed on the assets 110A-N. A high deviation value combined with a low confidence score may indicate that corrective actions are needed to address a significant performance issue. On the other hand, a low deviation value combined with a high confidence score may indicate that the assets 110A-N are performing as expected and that no further action is necessary.

Further, the asset performance management module 112 causes the processor(s) 202 to map the determined deviation value with a prestored action table and determine the one or more actions to be performed on the one or more assets 110A-N based on the mapping.

Also, the asset performance management module 112 causes the processor(s) 202 to output the predicted set of performance parameters and the determined one or more actions to be performed on the user interface of the one or more user devices 108A-N.

In a preferred embodiment, in outputting the predicted set of performance parameters and the determined one or more actions to be performed on the user interface of the one or more user devices 108A-N, the asset performance management module 112 causes the processor(s) 202 to generate one or more AI-based insights on the predicted set of performance parameters and generate a performance report of the one or more assets 110A-N based on the generated one or more AI-based insights. Further, the asset performance management module 112 causes the processor(s) 202 to output the generated performance report and the generated one or more AI-based insights on the user interface of the one or more user devices 108A-N. In an exemplary embodiment, the one or more AI-based insights may provide information and recommendations based on the predicted performance parameters. These insights may include anomalies and outliers. For example, any unusual or unexpected patterns identified in the asset performance may indicate potential issues or opportunities. Further, the insights may include trends and correlations, where trends or relationships between different asset parameters are determined, allowing for predictive analysis and proactive maintenance. The insights may further include root cause analysis where any underlying causes of performance issues or deviations from expected behavior may be identified. Further, the insights may include optimization recommendations to improve asset performance, reduce costs, or increase efficiency. The insights may also include risk assessment by evaluating the potential risks associated with asset performance and recommending mitigation strategies. The insights may also include health status of the assets 110A-N, remaining life, and the like.

In an exemplary embodiment, the performance report may summarize the predicted performance parameters, the generated AI-driven insights, and any recommended actions. By generating the AI-based insights and performance reports, the asset performance management module 112 may help users make informed decisions and optimize the performance of their assets 110A-N.

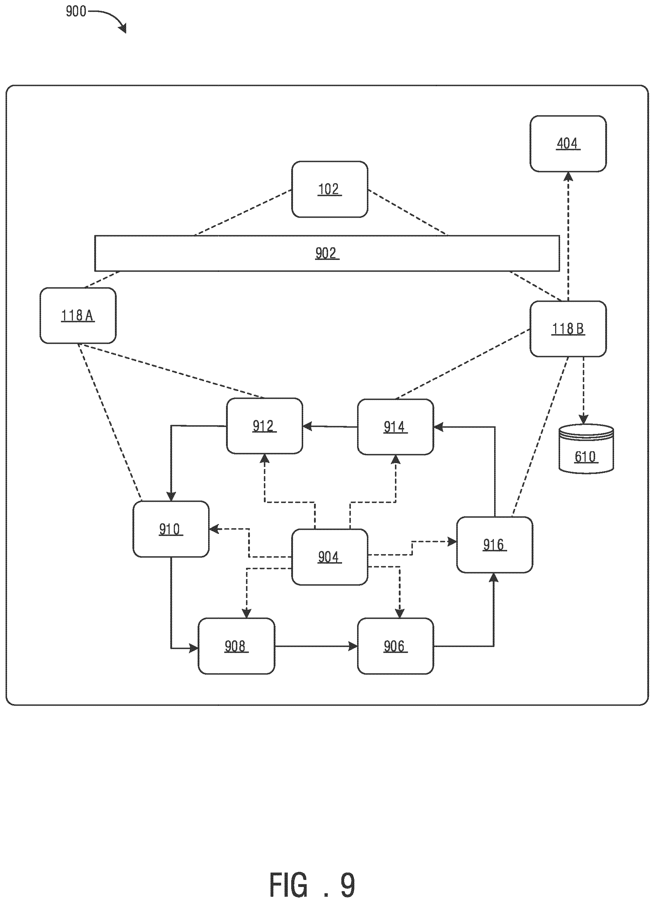

Further, the asset performance management module 112 causes the processor(s) 202 to generate an asset metadata structure for results of the trained asset performance model and each of the trained sub models. The asset metadata structure comprises information associated with at least one of a material sourcing, an asset durability, recycling guidelines, asset life cycle stages, a current status of the one or more assets, current performance parameters and current stake holders of the one or more assets 110A-N. In an example embodiment, results of the model building may be entered into a digital product passport (DPP) as a new tag, along with other information such as material sourcing, product durability, recycling guidelines and the like. This asset metadata structure provides a comprehensive view of the product life cycle. A detailed process of generating the asset metadata structure is disclosed in FIG. 9. In an exemplary embodiment, a Digital Product Passport (DPP) may be a digital record that contains information about a product's lifecycle. The DPP serves as a centralized repository for data related to the product's
design, manufacturing, usage, and end-of-life. Further, the asset performance management module 112 causes the processor(s) 202 to store the generated asset metadata structure in the central repository accessible by the one or more target devices 106A-N.

Further, the asset performance management module 112 causes the processor(s) 202 to establish a real-time communication channel between the one or more target devices 106A-N responsible for managing the performance of the one or more assets 110A-N based on the user request. The asset performance management module 112 further causes the processor(s) 202 to perform the one or more actions on the one or more assets 110A-N based on the predicted set of performance parameters using the established real-time communication channel.

Further, the asset performance management module 112 causes the processor(s) 202 to periodically generate a real-time status of the one or more assets 110A-N based on the obtained real-time data from the one or more target devices 106A-N and based on the one or more actions performed on the one or more assets. The real time status may be performance parameters, asset health, action status, risk assessment, anomalies/faults, abnormal activity, and the like. Further, the asset performance management module 112 causes the processor(s) 202 to map the generated real-time status with at least one asset lifecycle stage using an Artificial Intelligence (AI) model. The asset lifecycle stage refers to the plurality of stages that an asset 110A-N which goes through during its lifetime. The asset lifecycle stages may include design and development, production, deployment, usage, maintenance, and end-of-life. The AI model used to map the generated real-time status with the asset lifecycle stage may be any machine learning models, for example, decision trees, random forests, neural networks, or the like. Once the AI model is trained, it may be used to predict the current asset lifecycle stage based on the real-time status of the asset 110A-N. Further, the asset performance management module 112 causes the processor(s) 202 to periodically predict the set of performance parameters associated with the one or more assets 110A-N based on the mapping. Furthermore, the asset performance management module 112 causes the processor(s) 202 to determine the one or more actions to be performed on the one or more assets 110A-N based on the predicted set of performance parameters. Also, the asset performance management module 112 causes the processor(s) 202 to output the predicted set of performance parameters and the determined one or more actions to be performed on the user interface of the one or more user devices 108A-N.

The communication interface 206 is configured for establishing communication sessions between the one or more user device 108A-N, the one or more assets 110A-N, the one or more target devices 106A-N and the computing system 102. The communication interface 206 allows the web applications running on the user devices 108A-N to import/export sub-models, the real-time data, asset performance parameters, and the target parameters, into the computing system 102. In an embodiment, the communication interface 206 interacts with the interface at the user devices 108A-N for allowing the users to access the components of the one or more assets 110A-N and perform one or more actions. The network interface 208 helps in managing network communications between the one or more user device 108A-N, the one or more assets 110A-N, the one or more target devices 106A-N and the computing system 102.

The input-output unit 210 may include input devices a keypad, touch-sensitive display, camera (such as a camera receiving gesture-based inputs), and the like capable of receiving one or more input signals, such as user commands to process asset performance data. Also, the input-output unit 210 may be a display unit for displaying a graphical user interface which visualizes the asset performance data and also displays the status information associated with each set of actions performed on the assets 110A-N. The set of actions may include data entry, data modification or data display. The bus 212 acts as interconnect between the processor 202, the memory 204, and the input-output unit 210.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

FIG 3 is a block diagram of an asset performance management module 112, such as those shown in FIG 1 and 2, capable of managing performance of one or more assets 110A-N, according to the embodiment of the present invention. In FIG. 3, the asset performance management module 112 comprises a data receiver module 302, a model splitter module 304, a performance prediction module 306, a digital product passport 308, a model incentive management module 310, an action performance module 312, and a model training module 314.

The data receiver module 302 is configured to receive the request for managing a performance of one or more assets in the computing environment 100 from the one or more user devices 108A-N. The request comprises one or more user requirements and one or more user preferences. In an exemplary embodiment, a model activity is selected using the computing system 102. The model activity indicates which model building is required to be performed and the available parties required to perform this task.

The model splitter module 304 is configured to determine one or more target devices 106A-N in the computing environment 100, responsible for managing the performance of the one or more assets 110A-N, based on the received request. In an exemplary embodiment, before determining the one or more target devices 106A-N, validation step is performed to ensure if all selected target devices 106AN are live in the environment 100 and if they contain the relevant data features necessary to perform this task. Further, the model splitter module 304 is configured to determine the baseline Artificial Intelligence (AI) model corresponding to the performance of the one or more assets, based on at least one of the set of model parameters, the set of asset parameters, and the set of target device parameters. Once the validation is successful, a baseline AI model is selected from a repository that best represents the activity or task selected. The model splitter module 304 is responsible for splitting the baseline AI model into multiple sub models that could be separately trained and aggregated back to yield the exact same results as a single model. The model splitter module 304 is provided the baseline AI model, along with the number of target devices 106A-N available to perform this training, and the feature sets captured by each of the target devices 106A-N. This serves as the basis for a split algorithm to work. This split algorithm may divide the baseline AI model into a 'n' number of sub models to match 'n' target devices 106A-N. Each target device 106A may host 'x' number of features which means each of the 'n' sub model may take in 'x' number of inputs each. The original baseline AI model is then distilled into a new final ensemble based model with 'n' parts and one target variable. This may use, for example, but not limited to, a knowledge distillation based algorithm. Once the distillation process is complete, each of the individual sub model may be now available for separate training at each target device 106A-N. The baseline AI model is an ensemble model trained with a plurality of feature sets, providing a joint embedded representation of each feature set. These embeddings are combined and fed as input to the output layer. For training the baseline AI model, open datasets may be used, or synthetic data may be generated. During an inference cycle, an AI model is selected for inference. This includes model details, such as, for example, but not limited to, features used for training (with their statistics such as typical ranges, distributions), target devices 106A-N involved in the training, hyperparameters used in the training process, parameters of the model and the like.

Further, the model splitter module 304 is configured to classify the determined baseline AI model into one or more sub models based on a type of the one or more target devices 106A-N and a role of each of the one or more target devices 106AN. The model splitter module 304 considers this baseline AI model and extracts the individual sub models from them. Once the split is completed, each model portion or sub model is deployed to the respective target devices 106A-N. In classifying the determined baseline AI model into the one or more sub models, the model splitter module 304 is configured to determine a plurality of input variables available at each of the one or more target devices 106A-N and classify the determined baseline AI model into the one or more sub models based on the determined plurality of input variables.

Further, the model splitter module 304 is configured to deploy the one or more sub models at each of the one or more target devices 106A-N, based on the classification. In deploying the one or more sub models at each of the one or more target devices 106A-N the model splitter module 304 is configured to validate a status of the determined one or more target devices 106A-N based on the set of asset parameters corresponding to the one or more assets, and the set of target device parameters. The status comprises at least one of an active status, an inactive status, a faulty status, an idle status, and a standby status. Further, the model splitter module 304 is configured to deploy, the one or more sub models at each of the one or more target devices 106A-N based on the validated status.

The performance prediction module 306 is configured to obtain real-time data corresponding to the one or more assets 110A-N from the one or more target devices 106A-N, upon deploying the one or more sub models at each of the one or more target devices 106A-N. Further, the performance prediction module 306 is configured to predict a set of performance parameters associated with the one or more assets 110A-N based on the obtained real-time data, using a trained asset performance model. In predicting the set of performance parameters associated with the one or more assets 110A-N, the performance prediction module 306 is configured to segment the baseline AI model into the one or more sub models. Each of the one or more sub models comprise a similar output variable and a plurality of input variables. The segmented one or more sub models are fed to the model training module 314 to train the sub models locally at the target devices 106A-N and generate individual model weights. Further, the performance prediction module 306 is configured to generate the asset performance model for the one or more assets based on the obtained individual model weights and predict the set of performance parameters associated with the one or more assets 110A-N based on the obtained real-time data and the generated asset performance model. In predicting the set of performance parameters associated with the one or more assets 110A-N, the performance prediction module 306 is configured to obtain one or more part prediction values corresponding to the set of performance parameters from each of the one or more target devices 106A-N and predict the set of performance parameters associated with the one or more assets 110A-N by aggregating the obtained one or more part prediction values, using the generated asset performance model.

Further, the performance prediction module 306 is configured to determine at least one target device, for example, target device 106A, from among the one or more target devices 106A-N comprising an output label corresponding to a received request. Further, the performance prediction module 306 is configured to transmit the predicted set of performance parameters to the determined at least one target device 106A and compute one or more gradients for the asset performance model at the determined at least one target device 106A. The one or more gradients are computed by comparing the predicted set of performance parameters with a predefined set of performance parameters. Further, the performance prediction module 306 is configured to update model weights in the asset performance model based on the computed one or more gradients and iteratively update each of the trained sub models at each of the one or more target devices 106A-N based on the updated model weights in the asset performance model until reaching at least one of a model convergence and a pre-set number of epochs.

Further, the performance prediction module 306 is configured to determine one or more actions to be performed on the one or more assets 110A-N based on the predicted set of performance parameters. Further, the performance prediction module 306 is configured to output the predicted set of performance parameters and the determined one or more actions to be performed on a user interface of the one or more user devices 108A-N. In determining the one or more actions to be performed on the one or more assets 110A-N, the performance prediction module 306 is configured to validate the predicted set of performance parameters using an Artificial Intelligence (AI)-based action model and a set of prestored rules. Further, the performance prediction module 306 is configured to determine a deviation value in the predicted set of performance parameters based on results of validation. Furthermore, the performance prediction module 306 is configured to map the determined deviation value with a prestored action table and determine the one or more actions to be performed on the one or more assets 110A-N based on the mapping.

Further, the performance prediction module 306 is configured to periodically generate a real-time status of the one or more assets 110A-N based on the obtained real-time data from the one or more target devices 106A-N and based on the one or more actions performed on the one or more assets 110A-N. Further, the performance prediction module 306 is configured to map the generated real-time status with at least one asset lifecycle stage using an Artificial Intelligence (AI) model. Furthermore, the performance prediction module 306 is configured to periodically predict the set of performance parameters associated with the one or more assets 110A-N based on the mapping. Also, the performance prediction module 306 is configured to determine the one or more actions to be performed on the one or more assets 110A-N based on the predicted set of performance parameters. Furthermore, the performance prediction module 306 is configured to output the predicted set of performance parameters and the determined one or more actions to be performed on the user interface of the one or more user devices 108A-N.

The digital product passport 308 is configured to generate an asset metadata structure for results of the trained asset performance model and each of the trained sub models. The asset metadata structure comprises information associated with at least one of a material sourcing, an asset durability, recycling guidelines, asset life cycle stages, a current status of the one or more assets, current performance parameters and current stake holders of the one or more assets 110A-N. Further, the digital product passport 308 is configured to store the generated asset metadata structure in a central repository accessible by the one or more target devices 106A-N.

The model incentive management module 310 is configured to provide incentives to each participating target device, based on their level of engagement with the computing system 102. The incentives may be based on the number of models trained collaboratively, based on the number of data points provided to train, based on the hardware capability at individual target device, and the like. The incentives are boosted dynamically based on the overall activity performed by the target devices 106A-N.

The action performance module 312 is configured to establish a real-time communication channel between the one or more target devices 106A-N responsible for managing the performance of the one or more assets 110A-N based on a user request and perform the one or more actions on the one or more assets 110A-N based on the predicted set of performance parameters using the established real-time communication channel.

The model training module 314 is configured to train the one or more sub models at each of the one or more target devices 106A-N with a respective real-time data associated with corresponding target device 106A-N, using a federated learning technique and obtain individual model weights corresponding to each of the trained sub-models from the one or more target devices 106A-N. In training the one or more sub-models at each of the one or more target devices 106A-N with the respective real-time data associated with each target device 106A-N, using the federated learning model, the model training module 314 is configured to map a set of data instances associated with each of the one or more target devices 106A-N. Each of the one or more target devices 106-N comprise a unique feature space. The set of data instances at one target device 106A-N overlap with data instances of remaining target devices 106A-N. Further, the model training module 314 is configured to train the one or more sub-models at each of the one or more target devices 106A-N based on the mapped set of data instances.

In an exemplary embodiment, a training phase in federated learning comprises the target devices 106A-N collaboratively training a machine learning model, such as the baseline AI model, without sharing their raw data. This process utilizes the concept of Vertical Federated Learning (VFL), where the target devices 106A-N share overlapping data samples however have different feature spaces.

During the training phase, the computing system 102 identifies the specific model building task to be performed and determines the available target devices 106A-N with relevant data. The computing system 102 ensures that all selected target devices 106A-N are active and comprise the necessary data features for the task. A suitable baseline model is selected from a repository based on the selected activity. The baseline model is classified into multiple sub-models. These sub-models are distributed to the participating target devices 106A-N. Each target device 106A-N collects the required data for their assigned sub-model. The computing system 102 ensures that data instances used by different target devices 106A-N are aligned, while the target devices 106A-N may have different feature spaces. Each target devices 106A-N trains their respective sub-model on their local data using the Vertical Federated Learning algorithm. The target devices 106A-N communicate their trained model weights to either the computing system 102 or the intermediatory server (IS) 118A-N. The IS 118A-N aggregates the weights from all target devices 106A-N to update the global baseline model. A prediction is made using the updated global baseline model, and the target devices 106A-N with the actual output labels performs backpropagation to update the model further. The process of local training, weight exchange, and global model update is repeated for multiple epochs until convergence is reached or a predetermined number of epochs are completed.

In an exemplary embodiment, the inference cycle in federated learning comprises prediction of performance parameters on a test case data using a trained model. In this embodiment, the model is distributed across multiple target devices 106AN, and the inference process is coordinated by the computing system 102. A user selects a trained model from a model repository. Further, the model details, comprising features, parties involved, and hyperparameters, are displayed. The computing system 102 then verifies the availability of the participating target devices 106A-N. The trained model parts or the sub models are loaded onto the respective target devices 106A-N. If a target device, for example, target device 106A, has lost its local model, the target device 106A may retrieve the local model from the model repository backup. Each targe device 106A-N collects real-time data based on the features specified in the local model. The target devices 106A-N may use their local sub-models to make predictions on their portion of the data. The intermediary server (IS) 118A-N may collect partial predictions from all target devices 106A-N and combine them to generate a final prediction based on the global baseline model. The final prediction is displayed on the user interface of the one or more user devices 108A-N using, for example, suitable widgets or the like.

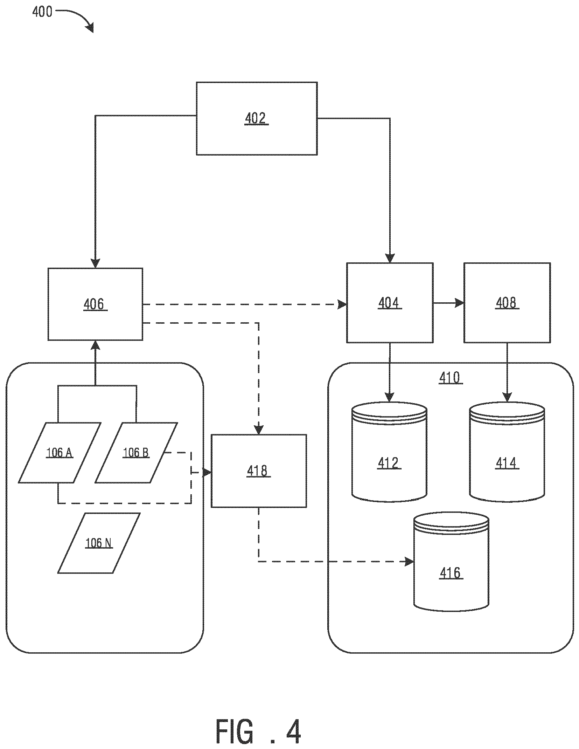

FIG 4 is a block diagram of service interactions 400 between the components of the computing environment 100 such as those shown in FIG. 1, according to an embodiment of the present invention. The one or more target devices 106A-N are clients or parties or stakeholders with actual sensitive data associated with the one or more assets 110A-N. The Unified Console service (UCS) 402 may be a platform or an application hosted on the computing system 102 and access by the one or more user devices 108A-N and the one or more target devices 106A-N using the network 104. The UCS 402 is configured to render a user portal of the platform displaying the model learnings, target device details and the like. The UCS 402 is configured to enable a common view of the computing environment 100. The UCS 402 may also display details of the model training and inferencing pipelines. Further, the UCS 402 may display the information of the target devices 106A-N for any selected model. Furthermore, the UCS 402 may display a data description of the selected target devices 106A-N. Also, the UCS 402 may display inferences of the models from participating target devices 106A-N. In an example embodiment, new users may explore/search models available on the computing system 102 and the corresponding target devices 106A-N responsible to build the models.

In case of the new users, a new target device is identified by its unique IP address and is required to be registered in the UCS 402 to participate in any model-building activities. A configuration template is made available in the console for the new client to download. This template includes details such as the IP address, of the new target device, unique data properties provided by the new target device, allowable data types for these properties, range definitions, and hardware specifications required for local model building. These configurations help identify the new target device for appropriate model-building activities. The settings may be reconfigured even after the registration is complete. For example, if the new target device initiates to capture new types of data points that contribute to the overall process, these changes may be updated in the configuration, prompting a re-registration process. Upon successful registration, the new client becomes visible on the UCS portal (or the platform).

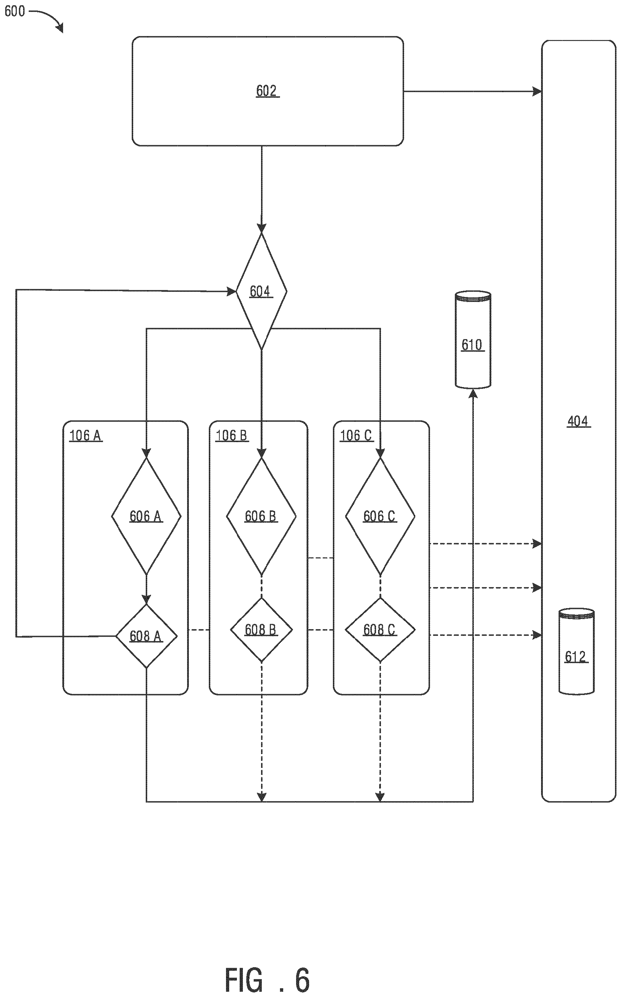

The Model management service (MMS) 404 may be responsible to build, track and store collaborative models. The MMS 404 may include a Model Splitter Service (MSS) (shown in FIG. 6) configured to split a given baseline AI model into sub models and have them trained locally on the target devices 106A-N hardware. This follows the model parallelism philosophy of distributed training. Any model which is trained on 'n' features may be split into a maximum of n' models separately trained at individual servers with their parameters propagating to the computing system 102.

The Federated Learning service (FLS) 406 is responsible to build models using the concept of Vertical Federated Learning (VFL). The VFL is used when the target devices 106A-N share overlapping samples however contain different feature space. The same set of data instances are correlated across the target devices 106A-N containing different feature space. This allows for joint decision making. This service 406 enables the model building with data available on on-prem servers (OS) that hosts individual data and communicates with the intermediary servers (IS) 118A-N to enable joint model training. In an exemplary embodiment, a hierarchical training may be performed, if more than one level of servers is identified for a given task.

The Incentive Management Service (IMS) 408 may be responsible for providing incentives to each participating target devices 106A-N, based on their level of engagement with the platform. This may be based on the number of models trained collaboratively, based on the number of data points provided to train, based on the hardware capability at individual target devices 106A-N, and the like. The incentives are boosted dynamically based on the overall activity.

In an example embodiment, the Data Management Service (DMS) 410 is responsible to manage the meta data of the participating target devices 106A-N. The DMS 410 comprises a model repository 412, a key value stores 414, and a database 416. The DMS 410 helps in identifying details of the target devices 106A-N involved in any machine learning activity. The DMS 410 interacts with the incentive management service 408 to provide the details of the data points used by the target devices 106A-N. For a given task, each target devices 106A-N may discover a feature requirement. The DMS 410 helps in displaying the own feature set of the target devices 106A-N, along with the required features from other target devices 106A-N that could help in building a model for the required task. For example, for a product assembler, it might be interesting to know what other data features may help them arrive at the Middle Life estimation (MoL) of their product. This may be the data from end consumers that provides information about product usage scenarios, operating conditions, and the like. In this case, the product assembler and the end consumers are the target devices 106A-N. Further, the DMS 410 may allow individual target devices 106A-N. to access their data and visualize them, study the value of their data in the overall task and the like.

The Network Management Service (NMS) 418 may be responsible to track and monitor the status of the participating target devices 106A-N. The NMS 418 identifies backups if the requested target device 106A-N is not available. Also, the NMS 418 is responsible for seamless weights transfer between the target devices 106A-N and FL servers 118A-N.

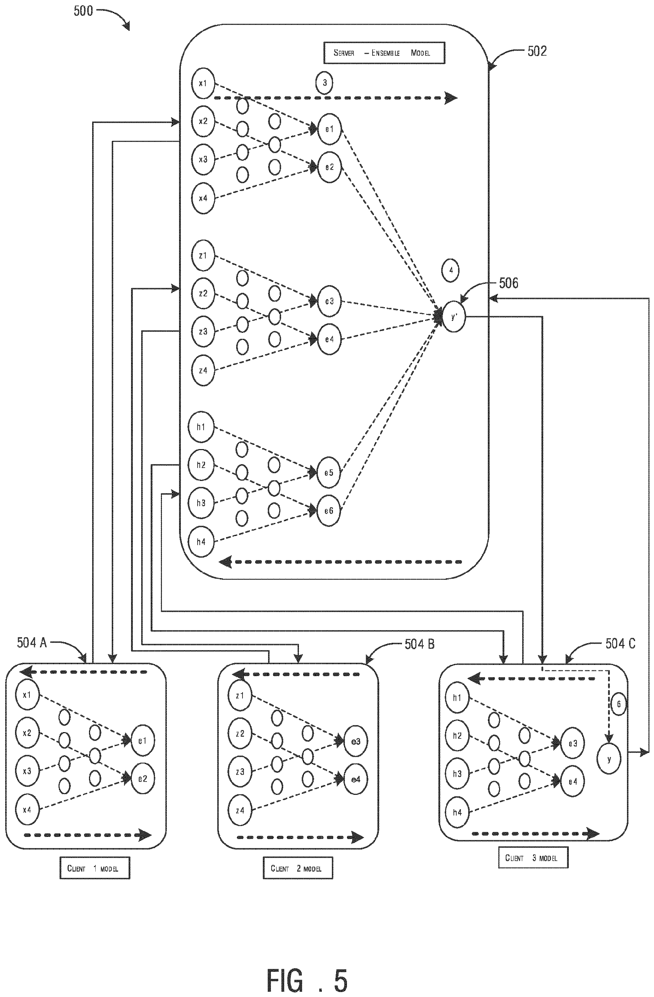

FIG 5 is a schematic representation of an exemplary baseline AI model and one or more sub-models, according to the embodiment of the present invention. A process of federated learning where multiple target devices 106A-N collaborate to train a shared model 504A-C without sharing their raw data is depicted in FIG. 5. The process involves model splitting. The computing system 102 splits the ensemble Model 502, which is the baseline AI model into multiple parts (sub-models) 504A-C. Each target device 106A-N receives a sub-model 504A-C and trains it on their local data (x1, x2, x3, x4). This local data may represent sensor readings, user interactions, or other relevant information specific to each target device 106A-N. Further, the target devices 106A-N may send their trained sub-model weights (e1, e2, e3, e4) to the computing system 102. These weights represent the learned information from the local data. The computing system 102 combines the received weights to update the global model 502. The updated global model 502 makes a prediction (y) 506 based on new input data (z1, z2, z3, z4). If the prediction is incorrect, the error is propagated back to the target devices 504A-C. This allows the target devices 106A-N to adjust their local models 504A-C in a way that improves the overall performance of the global model 502. Furthermore, the target devices 504A-C may update their local sub-models based on the received gradients. These steps are repeated until the model converges or reaches a desired number of epochs.

FIG 6 is a workflow diagram representing interactions of model management module 404 and incentive management service module 408, according to an embodiment of the present invention. At step 602, a baseline AI model is selected. The input features of the baseline AI model correspond to 1 to n and the output feature corresponds to `y'. At step 604, the baseline AI model is classified into one or more sub models retaining the same output feature "y" and with different input feature space. At step 606, the one or more classified sub models are deployed into the one or more target devices 106A-N. At step 608, each of the sub models are trained separately with respective target device data. The input features of each of the sub models corresponds to 1 to h and the output remains the same as "y" feature for each of the sub models. Upon training, the model weights are communicated after each training rounds until convergence. Further, the locally trained sub models and the final baseline AI model are stored in the central repository 610. The central repository 610 or the model repository 610 holds all models build in this platform, mapped to the respective tasks, with information of the target devices 106A-N involved in the model building. Later, based on the feature importance values of the final baseline AI model, incentives to the target devices 106A-N are determined using the IMS 408. The IMS 408 may include an incentive database 612 to determine the incentives to be computed for each of the target devices 106A-N.

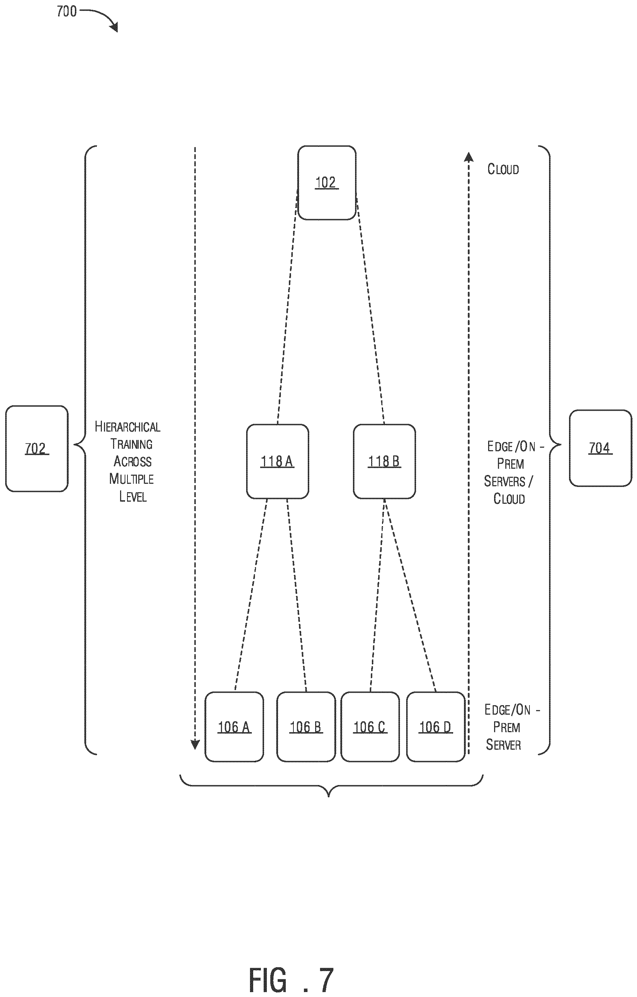

FIG 7 is a schematic representation of an exemplary computing environment capable of managing performance of one or more assets using a federated learning service 702 and a network management service 704, according to an embodiment of the present invention. Federated Learning Service (FLS) 702 may be responsible for coordinating the overall federated learning process. The FLS 702 manages the training and inference pipelines, handles model splitting, aggregation, and distribution. Further, the FLS 702 oversees the communication between the target devices 106A-N, intermediary servers 118AN, and the global FL server or the computing system 102. Further, the FLS 702 performs hierarchical training if more than one level of servers are identified for a given task. The intermediary federated learning servers 118A-N may act as intermediate nodes between the target devices 106A-N and the computing system 102. The intermediary federated learning servers 118A-N may handle model aggregation and distribution for specific groups of target devices 106A-N. The intermediary federated learning servers 118A-N may be on-Prem Servers or Cloud which may host individual client data and models. The intermediary federated learning servers 118A-N may perform local training and inference tasks. The intermediary federated learning servers 118A-N may be located on-premises or in the cloud, depending on the organization's infrastructure.

The Network Management Service (NMS) 704 (such as the NMS 418 as shown in FIG. 4) tracks and monitors the status of participating target devices 106A-N. The NMS 704 may be responsible to track and monitor the status of the participating target devices 106A-N. The NMS 704 identifies backups if the requested target device 106A-N is not available. Also, the NMS 704 is responsible for seamless weights transfer between the target devices 106A-N and intermediate FL servers 118A-N.

In an example embodiment, the computing system 102 splits a global model into sub-models and sends them to the intermediary servers 118A-N. The target devices 106A-N train their respective sub-models on their local data. The model weights are propagated from target devices 106A-N to intermediary servers 118A-N and then to the computing system 102. The computing system 102 combines the received weights to update the global model. The updated global model is used for inference, with predictions sent back to target devices 106A-N .

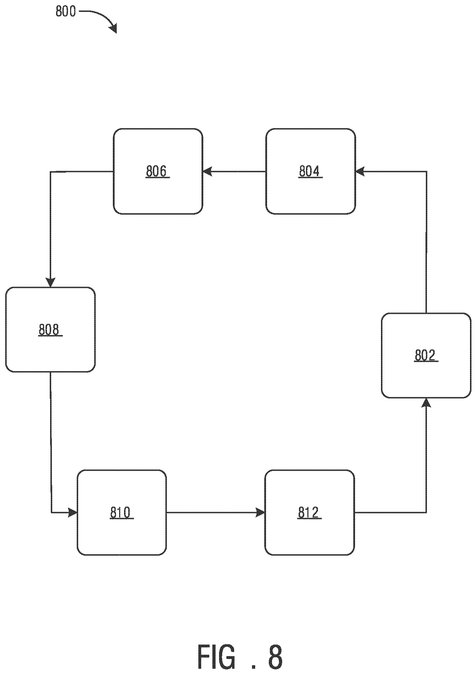

FIG 8 is a block diagram representation depicting an example process of managing performance of one or more assets, according to an embodiment of the present invention. FIG. 8 is an example of circular economy (CE). In CE, multiple stakeholders, such as the target devices 108A-N join the federation to enable the repair, refurbishment and recycle of assets 110A-N. The diagram depicts how a device undergoes various stages before reaching back to the material manufacturer. The consumer 802 may determine the most efficient routes for shipping waste to nearest recyclers 804 and share a collaborative model with the recyclers 804. The recyclers 804 or the used products collector 804 may transform waste from the device into valuable resources. The recyclers 804 or the used products collector 804 may determine material recycler and refurbisher 806 and generate a collaborative model for performing a task. The material recycler and refurbisher 806 may generate the collaborative model to learn material requirements over time. Further, the material recycler and refurbisher 806 may determine material manufacturers (such as batteries) 808. The material manufacturers (such as batteries) 808 determines the optimal materials needed for manufacturing new devices based on demand and recycled materials. The material manufacturers 808 may further determine the parts manufacturers (such as panels)810 to collaborative generate models. Further, the parts manufacturers (such as panels)810 may determine the OEMS 812 for predicting a remaining life of the products based on data collected from various stakeholders. Stakeholders collaborate with each other to achieve a circular economy by extending product lifecycles, optimizing resource use, and reducing waste.

FIG 9 is a schematic representation of a computing environment 900 capable of generating an asset metadata structure for results of the trained asset performance model and each of the trained sub models using a digital product passport, according to an embodiment of the present invention. The computing environment 900 comprises a Digital Product Passport (DPP) 902. The DPP 902 serves as a centralized repository for storing information related to a lifecycle of the assets 110A-N. The DPP 902 acts as a digital record, capturing data from various stages, including material sourcing, product durability, recycling guidelines, asset lifecycle stages, current status, performance parameters, and stakeholders. The results of the model building may be entered into a DPP 902 as a new tag, along with other information such as material sourcing, product durability, recycling guidelines and the like providing a complete view of the asset life cycle. In an example embodiment, in order to predict the RUL of an asset 110A-N, if asset manufacturer 906 and consumer data is combined, specific patterns may be derived from the asset assembly and usage. This may be further used to arrive at degrading trends for asset KPIs. In another example use case, the platform may include a route optimization, where if an end consumer 916 and faulty product collectors 914 collaborate, it may help in generating optimal times and routes to ship faulty products. In some other examples, product collectors 914 and recyclers 912 may collaborate to identify mechanisms to convert waste into valuable by-products by analysing the quality and quantity of waste collected. Further, if recycling units 912 and OEMs 910 collaborate, it may help in gaining insights on future demands for materials needed for new production. The OEMs 910 may further determine the parts manufacturers 908 to collaborative generate models. Each of these nodes in the circular economy, such as the consumer 916, the used product collector 914, the material recycler 912, the material manufacturer 910, the parts manufacturer 908 and the product manufacturer 906 may be controller by a central network manager 904. Further, data from each of these nodes may be sent to the intermediatory FL servers 118A-N. The intermediatory servers 118A-N may then transfer this data to the global server 102 and further the data may be stored in the DPP 902. The intermediatory servers 118A-N may also transfer this data to the incentive manager 408 for computing the incentives to each of these nodes in the circular economy.

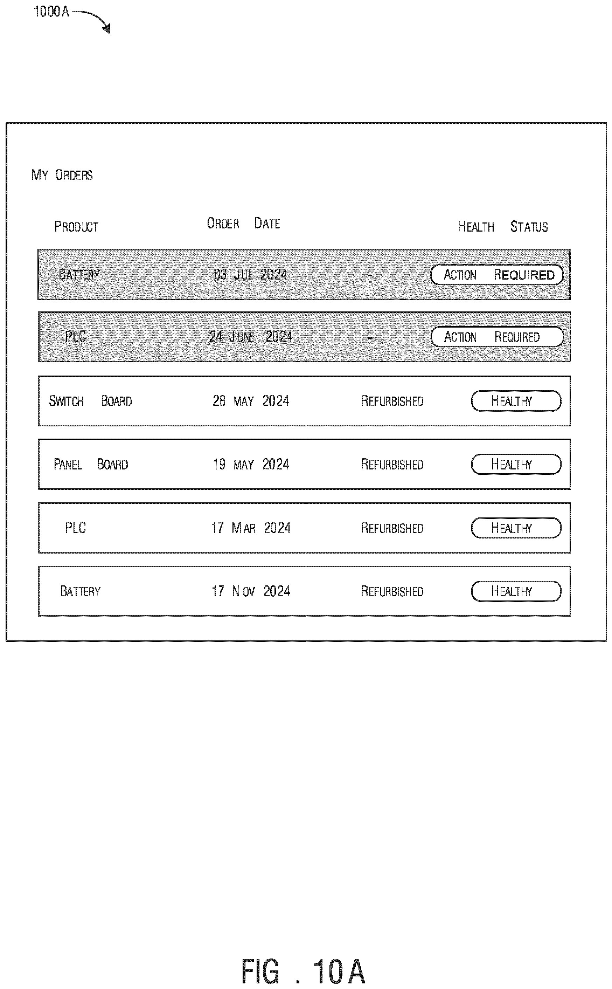

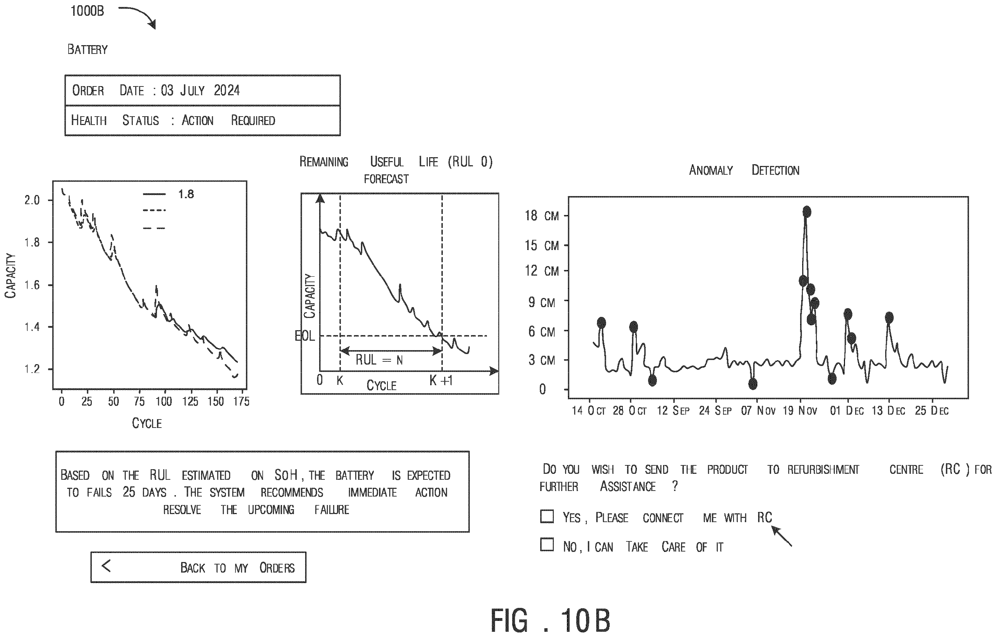

FIGs 10A-C are snapshot representations of example graphical user interface (GUI) screens depicting a process of managing performance of one or more assets 110A-N, according to an embodiment of the present invention. FIG. 10A depicts a GUI screen displaying information about different assets 110A-N, such as batteries, PLCs, switch boards, panel boards, and the like. The information may include a product name, an order date, and a health status. The health status indicates current condition of the assets 110A-N. In this example, health status may comprise, for example, but not limited to, "Action required", "Refurbished" and "Healthy." FIG. 10B depicts an example GUI screen displaying an overview of a battery's health status and provides recommendations for further action. The GUI screen displays a product type, order date, health status, and State of Health (SoH) Forecast. The SoH Forecast may indicate a declining trend as shown in the graph, indicating that the battery's health is deteriorating. Further, the GUI screen may include a Remaining Useful Life (RUL) Forecast indicating that the battery is predicted to fail in 25 days based on the current SoH.

Further, an anomaly detection graph depicts a spike in anomalies, suggesting potential issues with the battery. The GUI screen further display recommendations such as immediate action required. The system recommends taking immediate action to address the upcoming battery failure. The user is given the option to send the battery to a refurbishment center for further assistance.

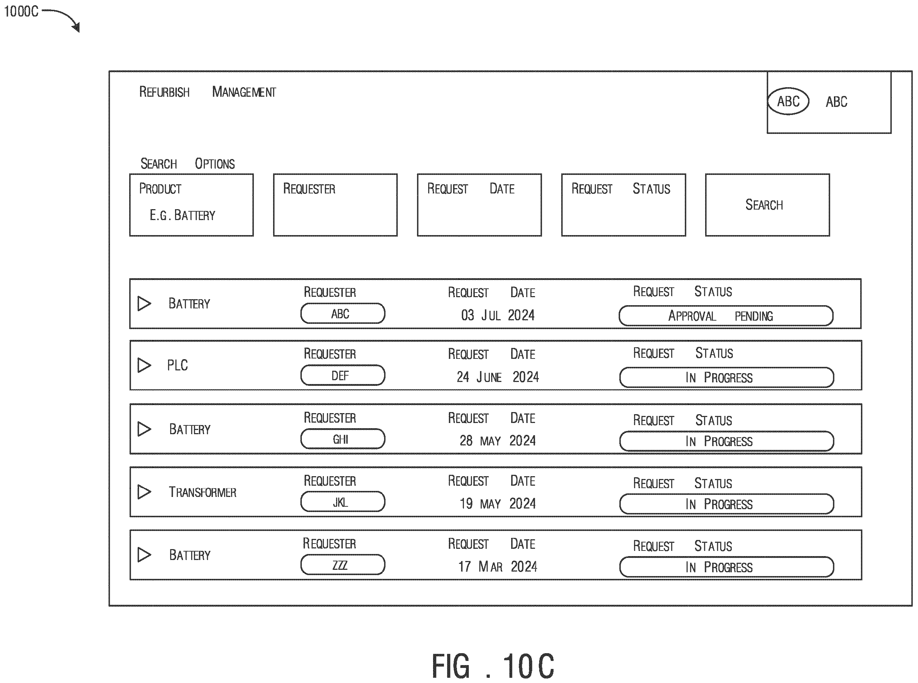

FIG. 10C depicts a GUI screen for a refurbishment management system. The GUI screen depicts a list of products that have been requested for refurbishment, along with their status and other relevant information. Specifically, the GUI screen displays a list of products that have been requested for refurbishment, including the product type, requester, request date, and request status. The request status indicates the current status of each request, such as "Approval Pending" or "In Progress." The users may view, track, and manage refurbishment requests. The users may also view the progress of each request and receive notifications when the status changes.

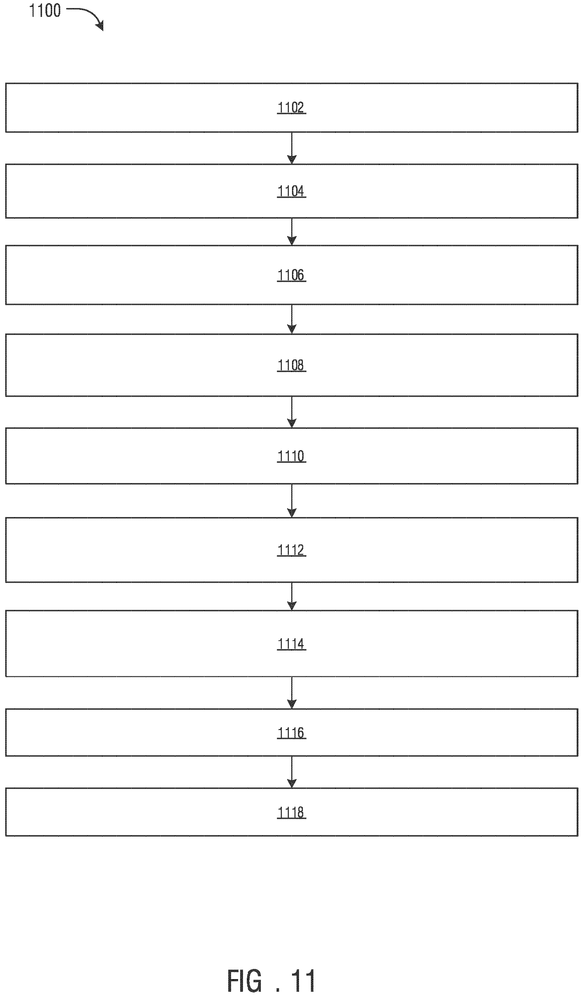

FIG 11 is a process flowchart illustrating an exemplary method 1100 for managing performance of one or more assets 110A-N, according to an embodiment of the present invention. At step 1102, a request for managing a performance of one or more assets 110A-N in a computing environment 100 is received from one or more user devices 108A-N. The request comprises one or more user requirements and one or more user preferences.

At step 1104, one or more target devices 106A-N in the computing environment 100, responsible for managing the performance of the one or more assets 110A-N are determined based on the received request. At step 1106, a baseline Artificial Intelligence (AI) model corresponding to the performance of the one or more assets is determined based on at least one of a set of model parameters, a set of asset parameters, and a set of target device parameters. At step 1108, the determined baseline AI model is classified into one or more sub models based on a type of the one or more target devices 106A-N and a role of each of the one or more target devices 106A-N. At step 1110, the one or more sub models are deployed at each of the one or more target devices 106A-N based on the classification. At step 1112, a real-time data corresponding to the one or more assets 110A-N is obtained from the one or more target devices 106A-N, upon deploying the one or more sub models at each of the one or more target devices 106A-N. At step 1114, a set of performance parameters associated with the one or more assets 110-N are predicted based on the obtained real-time data, using a trained asset performance model. At step 1116, one or more actions to be performed on the one or more assets 110A-N are determined based on the predicted set of performance parameters. At step 1118, the predicted set of performance parameters and the determined one or more actions to be performed are outputted on a user interface of the one or more user devices 108A-N.

In deploying the one or more sub models at each of the one or more target devices 106A-N, the method 1100 further comprises validating a status of the determined one or more target devices 106A-N based on the set of asset parameters corresponding to the one or more assets 110A-N, and the set of target device parameters. The status comprises at least one of an active status, an inactive status, a faulty status, an idle status, and a standby status. Further, the method 1100 comprises deploying the one or more sub models at each of the one or more target devices 106A-N based on the validated status. In classifying the determined baseline AI model into the one or more sub models, the method 1100 comprises determining a plurality of input variables available at each of the one or more target devices 106A-N. Further, the method 1100 comprises classifying the determined baseline AI model into the one or more sub models based on the determined plurality of input variables.

In predicting the set of performance parameters associated with the one or more assets 110A-N, the method 1100 comprises segmenting the baseline AI model into the one or more sub models. Each of the one or more sub models comprise a similar output variable and a plurality of input variables. Further, the method 1100 comprises training the one or more sub models at each of the one or more target devices 106A-N with a respective real-time data associated with corresponding target device 106A-N, using a federated learning technique. The method 1100 further comprises obtaining individual model weights corresponding to each of the trained sub-models from the one or more target devices 106A-N. Furthermore, the method 1100 comprises generating the asset performance model for the one or more assets 110A-N based on the obtained individual model weight. The method 1100 further comprises predicting the set of performance parameters associated with the one or more assets 110A-N based on the obtained real-time data and the generated asset performance model.

In predicting the set of performance parameters associated with the one or more assets 110A-N, the method 1100 comprises obtaining one or more part prediction values corresponding to the set of performance parameters from each of the one or more target devices 106A-N and predicting the set of performance parameters associated with the one or more assets 110A-N by aggregating the obtained one or more part prediction values, using the generated asset performance model.

The method 1100 further comprises determining at least one target device from among the one or more target devices 106A-N comprising an output label corresponding to a received request. The method 1100 further comprises transmitting the predicted set of performance parameters to the determined at least one target device. Further, the method 1100 comprises computing one or more gradients for the asset performance model at the determined at least one target device 106A-N. The one or more gradients are computed by comparing the predicted set of performance parameters with a predefined set of performance parameters. Further, the method 1100 comprises updating model weights in the asset performance model based on the computed one or more gradients and iteratively updating each of the trained sub models at each of the one or more target devices based on the updated model weights in the asset performance model until reaching at least one of a model convergence and a pre-set number of epochs.

In training the one or more sub-models at each of the one or more target devices 106A-N with the respective real-time data associated with each target device 106A-N, using the federated learning model, the method 1100 further comprises mapping a set of data instances associated with each of the one or more target devices 106A-N. Each of the one or more target devices 106A-N comprise a unique feature space. The set of data instances at one target device overlap with data instances of remaining target devices 106A-N. Further, the method 1100 comprises training the one or more sub-models at each of the one or more target devices 106A-N based on the mapped set of data instances.

In determining the one or more actions to be performed on the one or more assets 110A-N, the method 1100 further comprises validating the predicted set of performance parameters using an Artificial Intelligence (AI)-based action model and a set of prestored rules. Further, the method 1100 comprises determining a deviation value in the predicted set of performance parameters based on results of validation. Further, the method 1100 comprises mapping the determined deviation value with a prestored action table and determining the one or more actions to be performed on the one or more assets based on the mapping.

In outputting the predicted set of performance parameters and the determined one or more actions to be performed on the user interface of the one or more user devices 108A-N, the method 1100 comprises generating one or more AI-based insights on the predicted set of performance parameters. Further, the method 1100 comprises generating a performance report of the one or more assets 110AN based on the generated one or more AI-based insights. Furthermore, the method 1100 comprises outputting the generated performance report and the generated one or more AI-based insights on the user interface of the one or more user devices 108A-N.

The method 1100 further comprises generating an asset metadata structure for results of the trained asset performance model and each of the trained sub models. The asset metadata structure comprises information associated with at least one of a material sourcing, an asset durability, recycling guidelines, asset life cycle stages, a current status of the one or more assets 110A-N, current performance parameters and current stake holders of the one or more assets 110A-N. Further, the method 1100 comprises storing the generated asset metadata structure in a central repository 610 accessible by the one or more target devices 106A-N.

The method 1100 further comprises establishing a real-time communication channel between the one or more target devices 106A-N responsible for managing the performance of the one or more assets 110A-N based on a user request. The method 1100 comprises performing the one or more actions on the one or more assets based on the predicted set of performance parameters using the established real-time communication channel.

The method 1100 comprises periodically generating a real-time status of the one or more assets 110A-N based on the obtained real-time data from the one or more target devices 106A-N and based on the one or more actions performed on the one or more assets 110A-N. Further, the method 1100 comprises mapping the generated real-time status with at least one asset lifecycle stage using an Artificial Intelligence (AI) model. Furthermore, the method 1100 comprises periodically predicting the set of performance parameters associated with the one or more assets 110A-N based on the mapping. Also, the method 1100 comprises determining the one or more actions to be performed on the one or more assets 110A-N based on the predicted set of performance parameters. Furthermore, the method 1100 comprises outputting the predicted set of performance parameters and the determined one or more actions to be performed on the user interface of the one or more user devices 108A-N.

The present invention provides secure and seamlessly integrated method and system for performing any activity or a task relating to an asset in an environment. The system extracts insights out of a disconnected system with no invasion into privacy of the participating target devices 106A-N. The present system uses Federated Learning to ensure the privacy of the data at each target devices 106A-N level and provide efficient model building strategies to enable the selection of the best baseline model and split them before training at each target devices 106A-N level. This combined with incentivization methods, facilitates the collaboration, and improves the participation of the target devices 106A-N. This present system provides a secure and collaborative environment for training machine learning models on distributed datasets without compromising data privacy. Each target devices 106A-N may have exclusive access to their own data and may contribute to shared models. The present system may efficiently train models across multiple data servers, dynamically selecting the most suitable ones. The present system further splits models into appropriate parts for distributed training and aggregates results for a unified model. The present system further minimizes communication overhead between the target devices 106A-N, accelerating model convergence.

The present system leverages combined knowledge from multiple target devices 106A-N for better decision-making. The present system facilitates each target devices 106A-N to contribute significantly to the overall task, with aggregated results leading to improved performance. The present system enables organizations to create a new portfolio of assets 110A-N. Using this system as a foundation, the organizational may engage their end customers to provide advanced modelling capabilities that are not feasible with data isolated within individual customers. The present system enables organizations to derive insights from multiple customer datasets simultaneously. The present system may also integrate with other platforms, such as those for collecting PCF data or computing LCA, or Green Digital Twin which may enhance model-building activities. Additionally, the present system may help address critical challenges in various sectors, such as industrial automation, process engineering, healthcare and financial systems, by ensuring data privacy and facilitating shared insights. The present system also enable early recycling and refurbishment of the assets 110A-N, thereby contributing to lesser industrial waste complying to jurisdictional regulations.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of Reference Numerals:

- 100: Computing Environment
- 102: Computing System
- 104: Network
- 106A - N: Target Devices
- 108A - N: User Devices
- 110A - N: Assets
- 112: Asset Performance Management Module
- 114: External Repository
- 116: Technical Installation
- 118A - N: Intermediatory Federated Learning Server
- 120A - N: Secondary Communication Network
- 202: Processor
- 204: Memory
- 206: Communication Interface
- 208: Network Interface
- 210: Input/Output Unit
- 212: Bus
- 302: Data Receiver Module
- 304: Model Splitter Module
- 306: Performance Prediction Module
- 308: Digital Product Passport
- 310: Model Incentive Management Module
- 312: Action Performance Module
- 314: Model Training Module
- 402: Unified Console Service (UCS)
- 404: Model Management Service (MMS)
- 40: Federated Learning Service (FLS)
- 408: Incentive Management Service (IMS)
- 410: Data Management Service (DMS)
- 412: Model Repository
- 416: Database
- 418: Network Management Service (NMS)
- 502: Ensemble Model
- 504A - C: Sub Models
- 506: Output Variable
- 610: Central Repository
- 612: Incentive Database
- 702: Federated Learning Service
- 704: Network Management Service
- 802: Consumer
- 804: Recyclers
- 806: Refurbisher
- 808: Material Manufacturers
- 810: Parts Manufacturers
- 812: OEMs
- 902: Digital Product Passport
- 904: Central Network Manager
- 906: Product Manufacturer
- 908: Parts Manufacturer
- 910: Material Manufacturer
- 912: Material Recycler
- 914: Used Product Collector
- 916: Consumer

## Claims

1. A method (1100) for managing performance of one or more assets (108A-N) in a computing environment (100), the method (1100) comprising:
receiving, by a processor (202), a request for managing a performance of one or more assets (110A-N) in a computing environment (100), from one or more user devices (108A-N), wherein the request comprises one or more user requirements and one or more user preferences;
determining, by the processor (202), one or more target devices (106A-N) in the computing environment (100), responsible for managing the performance of the one or more assets (110A-N), based on the received request;
determining, by the processor (202), a baseline Artificial Intelligence (AI) model corresponding to the performance of the one or more assets (110A-N), based on at least one of a set of model parameters, a set of asset parameters, and a set of target device parameters;
classifying, by the processor (202), the determined baseline AI model into one or more sub models based on a type of the one or more target devices (106AN) and a role of each of the one or more target devices (106A-N);
deploying, by the processor (202), the one or more sub models at each of the one or more target devices (106A-N), based on the classification;
obtaining, by the processor (202), real-time data corresponding to the one or more assets (110A-N) from the one or more target devices (106A-N), upon deploying the one or more sub models at each of the one or more target devices (106A-N);
predicting, by the processor (202), a set of performance parameters associated with the one or more assets (110A-N) based on the obtained real-time data, using a trained asset performance model;
determining, by the processor (202), one or more actions to be performed on the one or more assets (110A-N) based on the predicted set of performance parameters; and
outputting, by the processor (202), the predicted set of performance parameters and the determined one or more actions to be performed on a user interface of the one or more user devices (108A-N).

2. The method (1100) as claimed in claim 1, wherein deploying the one or more sub models at each of the one or more target devices (106A-N), further comprises:
validating, by the processor (202), a status of the determined one or more target devices (106A-N) based on the set of asset parameters corresponding to the one or more assets (110A-N), and the set of target device parameters, wherein the status comprises at least one of an active status, an inactive status, a faulty status, an idle status and a standby status; and
deploying, by the processor (202), the one or more sub models at each of the one or more target devices (106A-N) based on the validated status.

3. The method (1100) as claimed in claim 1, wherein classifying the determined baseline AI model into the one or more sub models, further comprises:
determining, by the processor (202), a plurality of input variables available at each of the one or more target devices(106A-N); and
classifying, by the processor (202), the determined baseline AI model into the one or more sub models based on the determined plurality of input variables.

4. The method (1100) as claimed in claim 1, wherein predicting the set of performance parameters associated with the one or more assets (110A-N), further comprises:
segmenting, by the processor (202), the baseline AI model into the one or more sub models, wherein each of the one or more sub models comprise a similar output variable and a plurality of input variables;
training, by the processor (202), the one or more sub models at each of the one or more target devices (106A-N) with a respective real-time data associated with corresponding target device, using a federated learning technique;
obtaining, by the processor (202), individual model weights corresponding to each of the trained sub-models from the one or more target devices(106A-N);
generating, by the processor (202), the asset performance model for the one or more assets (110A-N) based on the obtained individual model weights; and
predicting, by the processor (202), the set of performance parameters associated with the one or more assets (110A-N) based on the obtained real-time data and the generated asset performance model.

5. The method (1100) as claimed in claim 4, wherein predicting the set of performance parameters associated with the one or more assets (110A-N), further comprises:
obtaining, by the processor (202), one or more part prediction values corresponding to the set of performance parameters from each of the one or more target devices(106A-N); and
predicting, by the processor (202), the set of performance parameters associated with the one or more assets (110A-N) by aggregating the obtained one or more part prediction values, using the generated asset performance model.

6. The method (1100) as claimed in claim 4, further comprising:
determining, by the processor (202), at least one target device from among the one or more target devices (106A-N) comprising an output label corresponding to a received request;
transmitting, by the processor (202), the predicted set of performance parameters to the determined at least one target device;
computing, by the processor (202), one or more gradients for the asset performance model at the determined at least one target device, wherein the one or more gradients are computed by comparing the predicted set of performance parameters with a predefined set of performance parameters;
updating, by the processor (202), model weights in the asset performance model based on the computed one or more gradients; and
iteratively updating, by the processor (202), each of the trained sub models at each of the one or more target devices (106A-N) based on the updated model weights in the asset performance model until reaching at least one of a model convergence and a pre-set number of epochs.

7. The method (1100) as claimed in claim 4, wherein training the one or more sub-models at each of the one or more target devices (106A-N) with the respective real-time data associated with each target device, using the federated learning model, further comprises:
mapping, by the processor (202), a set of data instances associated with each of the one or more target devices(106A-N), wherein each of the one or more target devices (106A-N)comprise a unique feature space, and wherein the set of data instances at one target device overlap with data instances of remaining target devices (106A-N); and
training, by the processor (202), the one or more sub-models at each of the one or more target devices (106A-N) based on the mapped set of data instances.

8. The method (1100) as claimed in claim 1, wherein determining the one or more actions to be performed on the one or more assets (110A-N), further comprises:
validating, by the processor (202), the predicted set of performance parameters using an Artificial Intelligence (AI)-based action model and a set of prestored rules;
determining, by the processor (202), a deviation value in the predicted set of performance parameters based on results of validation;
mapping, by the processor (202), the determined deviation value with a prestored action table; and
determining, by the processor (202), the one or more actions to be performed on the one or more assets (110A-N) based on the mapping.

9. The method (1100) as claimed in claim 1, wherein outputting the predicted set of performance parameters and the determined one or more actions to be performed on the user interface of the one or more user devices (108A-N) comprises:
generating, by the processor (202), one or more AI-based insights on the predicted set of performance parameters;
generating, by the processor (202), a performance report of the one or more assets (110A-N) based on the generated one or more AI-based insights; and
outputting, by the processor (202), the generated performance report and the generated one or more AI-based insights on the user interface of the one or more user devices (108A-N).

10. The method (1100) as claimed in claim 1, further comprising:
generating, by the processor (202), an asset metadata structure for results of the trained asset performance model and each of the trained sub models, wherein the asset metadata structure comprises information associated with at least one of a material sourcing, an asset durability, recycling guidelines, asset life cycle stages, a current status of the one or more assets (110A-N), current performance parameters and current stake holders of the one or more assets (110A-N); and
storing, by the processor (202), the generated asset metadata structure in a central repository (610) accessible by the one or more target devices (106A-N).

11. The method (1100) as claimed in claim 1, further comprising:
establishing, by the processor (202), a real-time communication channel between the one or more target devices (106A-N) responsible for managing the performance of the one or more assets (110A-N) based on a user request; and
performing, by the processor (202), the one or more actions on the one or more assets (110A-N) based on the predicted set of performance parameters using the established real-time communication channel.

12. The method (1100) as claimed in claim 1, further comprising:
periodically generating, by the processor (202), a real-time status of the one or more assets (110A-N) based on the obtained real-time data from the one or more target devices (106A-N) and based on the one or more actions performed on the one or more assets (110A-N);
mapping, by the processor (202), the generated real-time status with at least one asset lifecycle stage using an Artificial Intelligence (AI) model;
periodically predicting, by the processor (202), the set of performance parameters associated with the one or more assets (110A-N) based on the mapping;
determining, by the processor, the one or more actions to be performed on the one or more assets based on the predicted set of performance parameters; and
outputting, by the processor (202), the predicted set of performance parameters and the determined one or more actions to be performed on the user interface of the one or more user devices (108A-N).

13. A computing system (102) for managing performance of one or more assets (110A-N) in a computing environment (100), the computing system (102) comprising:
one or more processor(s) (202); and
a memory (204) coupled to the one or more processor(s) (202), wherein the memory (204) comprises an asset performance management module (112) stored in the form of machine-readable instructions executable by the one or more processor(s) (202), wherein the asset performance management module (112) is capable of performing method steps according to any of the claims 1-12.

14. A computing environment (100) comprising:
one or more user devices (108A-N);
one or more technical installations (116) comprising one or more assets (110A-N); and
a computing system (102) communicatively coupled to the one or more technical installation (116) and the one or more user devices (108A-N) via a network (104), wherein the computing system (102) comprises an asset performance management module (112) capable of performing method steps according to any of the claims 1-12.

15. A computer-program product, having machine-readable instructions stored therein, that when executed by a processor(s) (202), cause the processor(s) (202) to perform method steps according to any of the claims 1-12.
